# EUROPEAN PATENT APPLICATION

(11) **EP 1 939 786 A1**
(43) Date of publication of application: **02.07.2008**
(21) Application number: 07741077.7
(22) Date of filing: 05.04.2007
(51) Int. Cl.: G06F 21/24, G06Q 10/00, G06Q 30/00, G06Q 50/00

(54) **CONTENT PROVIDING SYSTEM**

(30) Priority: 05.04.2006 JP 2006104270
(71) Applicant: Faith, Inc., Nakagyo-ku Kyoto-shi Kyoto 604-8171 (JP)
(72) Inventor: KOMORI, Yorimoto, Kyoto-shi Kyoto 604-8171 (JP); SHIMBAYASHI, Toru, Kyoto-shi Kyoto 604-8171 (JP); TANAKA, Katsuya, Kyoto-shi Kyoto 604-8171 (JP); FUJII, Kazunobu, Kyoto-shi Kyoto 604-8171 (JP); KOISO, Misa, Kyoto-shi Kyoto 604-8171 (JP)
(74) Representative: Arth, Hans-Lothar
(86) International application number: PCT/JP2007/057641
(87) International publication number: WO 2007/116929

(57) **Abstract**

When the portable reproduction device 4 and the reproduction device 6 establish the communication by the near-distance communication part 56 and 72, a right state transmission means 48 of the portable reproduction 4 transmits to the reproduction device 6 the right state data based on the right data recorded at the right record part 50. Reproduction instruction acquisition means 66 of the reproduction device 6 receives the instruction to reproduce the contents for the reproduction device from the user. According to the right state data transmitted from the portable reproduction means 68 determines whether the reproduction device 6 has the right for the contents instructed to reproduced or not. When it is determined that the right exists, reproduction means 70 reproduce the contents for the reproduction device recording at the content record part 64. When it is determined that no right exists, reproduction is not permitted.

## Description

### Field of the Invention

The present invention relates to the contents providing system, and, in particular, to the system to manage rights of contents.

### Background of Invention

In the case of providing contents as picture or music, system to manage a right of the contents is proposed as the related art, Japanese Unexamined Patent Application Publication No. 2004-171377. This system manages the right as the followings. A user purchases the card for the desired contents. A code is printed on this card. The user accesses to the specified server by a mobile phone and input the code. The server verifies the correspondence relation between the contents and the code, if the code corresponds to the contents, the user can download the contents in his/her mobile phone. After that, the user can reproduce the downloaded contents using his/her mobile phone.

The related art: Japanese Laid-open Patent Application No. 2004-171377

### Disclosure of the Invention

### Problem to be Solved by the Invention

The above related art, however, has technical problems as described below. The related art verifies the right at the time of purchasing the contents, cannot manage the reproduction by the illegal way as using the illegal copying contents after purchase. Otherwise, the user can reproduce only the contents downloaded on his/her device, cannot reproduce the same contents downloaded on other people's device. That is, the reproduction of the contents is controlled but the right management system does not work efficiently. The related art is not the preferred system for both the right holder and the user.

This invention aims to provide a system resolving the above problem, controlling the reproduction of the non-right holder, and allowing the right holder greater flexibility of the reproduction of the contents.

### Means to Solve the Problem

(1) A contents providing system according to the present invention having a right verification device and a reproduction device, wherein:
the right verification device comprises:
   access means for accessing a right recording part recording right data; and
   a near-distance communication part communicating with the reproduction device by the near-distance communication method;
the reproduction device comprises:
   access means for accessing a content recording part recording contents for the reproduction device;
   a near-distance communication part communicating with the right verification device by the near-distance communication method; and reproduction means for reproducing the contents for the reproduction device verified the existence of the right data corresponding to the contents by the right verification means;
the right verification device or the reproduction device further comprises:
   the right verification means for verifying by communication between the right verification device and the reproduction device using each said near-distance communication part whether the right data is stored in the right recording part connected to the right verification device or not, the right data corresponding to the contents for the reproduction device to be reproduced.

This enables to permit the reproduction of the contents only in the case that the right verification device locates at the near position of the reproduction device. This, therefore, enables to avoid the reproduction using illegal copying contents, and to permit the reproduction of the contents in the reproduction device located at other position in the case that the right verification device has the right.

(6) In the contents providing system according to the present invention, the right verification devise further comprises:
right state transmission means for transmitting data of showing a right state to the reproduction device by the near-distance communication part;
the right verification means for verifying whether the right data is recorded in the right recording part connected to the right verification device or not by the data of showing the right state received from the right verification device.

(7) In the contents providing system according to the present invention, the right recording part is portable recording medium connected to the right verification device.

This enables to record more right data by preparing the plural right recording parts.

(8) In the contents providing system according to the present invention, the portable recording medium records the right data containing a code identifying the contents for the reproduction device and a code identifying the right verification device or a user using the right verification device.

This enables to carry the right data, and to prevent illegal use of contents.

(9) In the contents providing system according to the present invention, the portable recording medium records the right data containing a code identifying the contents for the reproduction device and a code identifying the right verification device or a user using the right verification device.

This enables to carry the right data, and to prevent illegal use of contents.

(10) In the contents providing system according to the present invention, the right verification means receives the code identifying the right verification device establishing the communication with the reproduction device or the user using the right verification device, decrypts the right data read from the portable recording medium in accordance with the code, and verifies whether the right data is decrypted accurately or not, the right data corresponding to the contents for the reproduction device to be reproduced.

This enables only for legal user having the right verification device to reproduce the contents.

(11) In the contents providing system according to the present invention, the right verification device comprises the right recording part.

(12) In the contents providing system according to the present invention, the right recording part is a portable recording medium connectable to the reproduction device.

This enables to acquire the contents by the portable recording media.

(13) In the contents providing system according to the present invention, the reproduction device comprises the content recording part.

(14) In the contents providing system according to the present invention, the contents for the reproduction device is transmitted from a sever device capable of communication with the reproduction device or a device connected with the reproduction device by the extensive communication method.

This enables to acquire the contents from the server device by extensive-distance communication method.

(15) In the contents providing system according to the present invention, the right verification device further comprises:
a reproduction instruction means for transmitting an instruction for reproducing contents to the reproduction device by the near-distance communication part;
the reproduction device further comprises:
   a reproduction instruction acquisition means for receiving the contents reproduction instruction from the right verification device by the near-distance communication; and
   the right verification means for verifying whether the right verification device has the right about the contents for the reproduction device, the contents instructed to reproduce from the right verification device.

This enables for the right verification device to instruct the reproduction of the contents to the reproduction device.

(16) In the contents providing system according to the present invention,
the right verification device comprises:
a communication startup means for starting processes for communication with the reproduction device using the near-distance communication part;
a right state transmission means for transmitting data showing a right state at starting the communication by the near-distance communication part;
the reproduction device comprises:
a memory control means for receiving the data of showing a right state by the near-distance communication part, memorizing the data to a temporary memory part, and deleting the data caused by closing the communication with the right verification device.

This enables to delete the data showing the right state after closing the reproduction of the contents corresponding to the right of the right verification device, as a result, to avoid the illegal reproduction of the contents.

(17) In the contents providing system according to the present invention, the right state transmission means transmits the data showing a right state of the right data by request from the reproduction device.

This enables for the reproduction device to request the transmission of the right state data for the right verification device in control of the reproduction device.

(18) In the contents providing system according to the present invention, the right verification device further comprises:
a communication part communicating with a right issuing device by extensive-distance communication method or near-distance communication method;
request means for transmitting a request for acquiring a right to the right issuing device by the communication part;
receiving means for receiving the right data from the right issuing device by the communication part.

(19) In the contents providing system according to the present invention, the right verification device is a portable reproduction device;
the portable reproduction device comprising:
an extensive-distance communication part communicating with a server device by extensive-distance communication method;
request means for transmitting the request for receiving the right to the server device by the extensive-distance communication part;
acquisition means for receiving the right data and the contents for a portable device from the server device by the extensive-distance communication method;
a content recording part recording the contents for a portable device received by the acquisition means; reproduction means for reproducing the contents for a portable device recorded at the content recording part;
reproduction instruction means for transmitting an instruction for reproducing the contents to the reproduction device by the near-distance communication part.

This enables for the portable reproduction device to reproduce the contents for the mobile device, and for the reproduction device to reject the reproduction if the portable reproduction device having the right exists at the near range. As the result, this enables to prevent the illegal use, and to reproduce the contents in the reproduction device at some other place if the user has the portable reproduction device having the right.

(20) In the contents providing system according to the present invention, the right verification means transmit the fact the right verification device does not have the right by the near-distance communication part, when determining the right verification device dose not have the right data corresponding to the contents for the reproduction device instructed to reproduce;
the portable reproduction device further comprises:
acquiring startup process means for starting a process for proposing to acquire the right when receiving the fact that the right verification device does not have the right by the near-distance communication part.

This enables to alert a user to acquire the right when the user has the contents but dose not have the right to reproduce.

(21) In the contents providing system according to the present invention, the right verification system, device and program permit or reject the reproduction by the following process A) or B):
A) permitting the reproduction by transmitting a signal for permitting the reproduction to the reproduction means when determining the reproduction device has the right data corresponding to the contents for a reproduction device instructed to reproduce, and, rejecting the reproduction by transmitting a signal for rejecting the reproduction or not transmitting the signal for permitting the reproduction when determining the reproduction device dose not have said right data,
B) permitting the reproduction by transmitting the signal for permitting the reproduction to the reproduction means or not transmitting the signal for rejecting the reproduction when determining the reproduction device has the right data corresponding to the contents for a reproduction device instructed to reproduce, and, rejecting the reproduction by transmitting the signal for rejecting the reproduction when determining the reproduction device dose not have said right data.

(22) In the contents providing system according to the present invention, the right data is a key to decrypt the encrypted contents for the reproduction device;
the right verification means permit the reproduction of the decrypted contents for the reproduction device by giving to the reproduction means said key for the contents for the reproduction device instructed to reproduce when determining the reproduction device has the key, and, rejecting the reproduction of the decrypted contents by not giving the key to the reproduction device when determining the reproduction device dose not have the key.

This enables to reject the reproduction of the contents by not sending the key for decryption when the user does not have the right for the reproduction.

(23) In the contents providing system according to the present invention, the right verification device is any one of a noncontact type IC card, a mobile phone, and a personal digital assistance.

(24) In the contents providing system according to the present invention, the reproduction device is any one of a video reproduction device, a hard disk recorder, a DVD reproduction device, a television set, a stereo device, a mobile music reproduction device, a personal computer, a car navigation device, and game console.

(25) In the contents providing system according to the present invention, the reproduction device comprises a main unit and a near-distance communication part;
the main unit comprising:
access means for accessing a content recording part recording for recording the contents for the reproduction device;
reproduction means for reproducing the contents verified the existence of the right data by the right verification device;
the near-distance communication part comprising:
   a near-distance communication part communicating with the right verification device by near-distance communication method.

This enables to apply this invention in the case that the main unit does not have the communication function.

(26) In the contents providing system according to the present invention, the main unit communicating with the right verification device, and acquiring the contents for the reproduction device through the right verification device capable of communicating by extensive-distance communication device.

(27) In the contents providing system according to the present invention, the reproduction device comprises a near-distance communication device and plural reproduction device;
each said reproduction device connected to the near-distance communication to communicate;
the near-distance communication device comprising the near-distance communication part and the right verification device.

This enables to verify the right concerning to plural reproduction devices by the near-distance communication part.

(28) In the contents providing system according to the present invention, the near-distance communication part of the right verification device and the reproduction device communicate by wired or wireless.

(29) In the contents providing system according to the present invention,
the reproduction device comprises:
transmission means for transmitting a suspended position of the contents for the reproduction device when receiving a signal for suspending the reproduction of the contents;
the right verification device comprises:
record means for recording the suspended position recorded to a recording part;
the right verification device transmitting the suspended position recorded with corresponding to the contents for the reproduction device with transmitting a command for reproduce the contents for the reproduction device to the reproduction device;
the reproduction device comprises:
restart means for restarting the reproduction of the contents for the reproduction device from the suspended position sent with the command.

This enables to restart the contents suspended reproducing at one reproduction device from the suspended position at other reproduction device.

In this invention, "a portable reproduction device" corresponds to a portable device capable of reproducing contents. In the concept of "a portable reproduction device" are contained a mobile phone, a portable TV set, a portable music player, a personal digital assistance, and other devices.

"A reproduction device" corresponds to a device capable of reproducing contents. In the concept of "a reproduction device" are contained a video reproduction device, a hard disk recorder, a DVD reproduction device, a TV set, a stereo device, a portable music player, a personal computer, a car navigation device, a game console and other devices.

"Contents" corresponds to electric data of a picture, music, a voice, an electric book and other data.

"Extensive-distance communication" corresponds to a communication using internet, public phone lines, extensive wireless communications, and others.

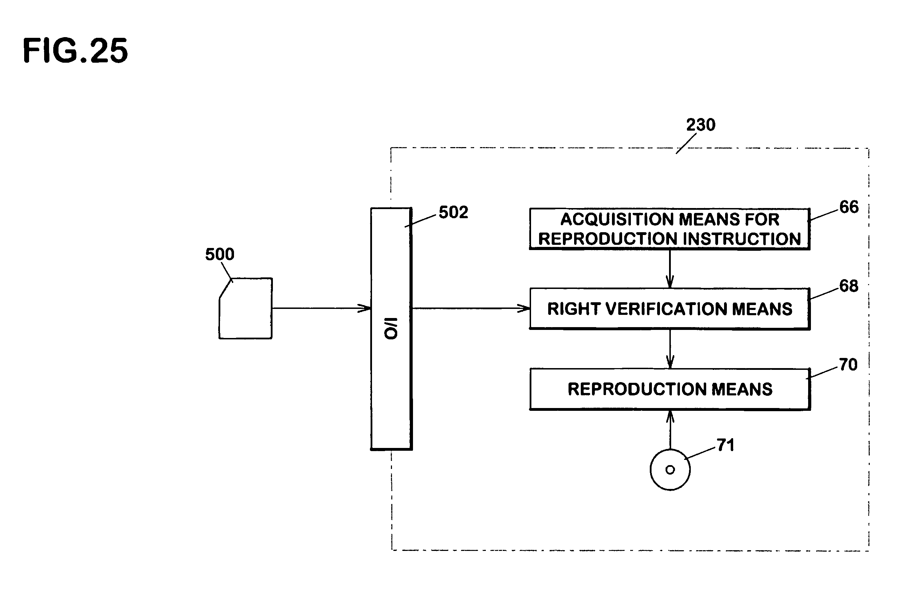

"Near-distance communication" corresponds to a wired or wireless communication capable of communicating at closing range as in the same building, as a infrared communication, an electric-magnetic combined communication, a Bluetooth (trademark), and others. In the concept of "A near-distance communication" is contained the communication between the portable recording media 500 and the right verification means 68 using the interface 502 of FIG.25.

"A communication part" corresponds to the part to communicate by the above extensive distance communication, the above near-distance communication, and others.

In the concept of "data showing the right state" are contained not only the right data itself but also data generated based on the right data

"A right verification device" corresponds to the device recording the data showing the existence of the right data or the right. In the concept of "a right verification device" are contained not also the right verification device 7 or the access point 200 of the second embodiment but also the portable reproduction device 6 of the first embodiment.

"Request means" corresponds to step S12 of the embodiment.

"Acquisition means" corresponds to step S13 of the embodiment.

"Right state transmission means" corresponds to step S18 of the embodiment.

"Reproduction means" corresponds to step S37 of the embodiment.

In the concept of "production instruction acquisition means" are contained not only the means to receive the reproduction instruction from a reproduction button of the reproduction device but also the means to receive the reproduction instruction transmitted from the right verification device.

"A right verification means" corresponds to step S32 of the embodiment. In the concept of the permission of the reproduction by the right verification are contained not only in the case that the reproduction device starts the reproduction, depending on transmitting the permission signal to the reproduction device but also in the case that the reproduction device starts the reproduction, depending on transmitting to the reproduction device the key for decrypting the encrypted contents for the reproduction device.

In the concept of "a program" are contained not only a CPU directly workable program but also a source type program, a compressed program, an encrypted program, and other program.

### Brief Description of the Drawings

FIG. 1 is an overall configuration view of the contents providing system in accordance with an embodiment of the present invention.
FIG.2 shows a hardware configuration of the portable reproduction device 4.
FIG.3 shows a hardware configuration of the reproduction device 6.
FIG.4 shows a hardware configuration of the server device 2.
FIG.5a is a flowchart of the control program for each device.
FIG.5b is a flowchart of the control program for each device.
FIG.5c is a flowchart of the control program for each device.
FIG.5d is a flowchart of the control program for each device.
FIG.6 shows a content table.
FIG.7 shows a screen image for purchase.
FIG.8 shows structures of the right data.
FIG.9 shows a screen image for selecting the function of the portable reproduction device 4.
FIG.10 shows a content list view of the portable reproduction device 4.
FIG. 11 shows a screen image for proposing to purchase the contents.
FIG.12 shows other embodiment.
FIG.13 shows an example of the portable reproduction device 4 in the case that the right data is recorded in the portable recording media 550.
FIG.14 is a flowchart showing process to record the right data on the system of FIG.13.
FIG.15 is a flowchart showing process to read out the right data on the system of FIG.13.
FIG.16 shows an example of the right data and the individual identification number.
FIG.17 is a flowchart showing process of the system capable of reproducing from the suspended position.
FIG.18 is a flowchart showing process of the system capable of reproducing from the suspended position.
FIG.19a shows a system configuration view in the case of applying the present invention to a car navigation device not having an extensive-distance communication function.
FIG.19b shows a system configuration view in the case of applying the present invention to a car navigation device not having an extensive-distance communication function.
FIG.19c shows a system configuration view in the case of applying the present invention to an audio device not having an extensive-distance communication function.
FIG.19d shows a system configuration view in the case of applying the present invention to an audio device not having an extensive-distance communication function.
FIG.20 is an overall configuration view of the contents providing system in accordance with the second embodiment.
FIG.21a shows a hardware configuration of the right verification device 7.
FIG.21b shows a hardware configuration of the rewrite device 5.
FIG.22a is a flowchart of the control program for each device.
FIG.22b is a flowchart of the control program for each device.
FIG.23 shows embodiment in the case of applying to a system having plural reproduction devices connected to the access point 200.
FIG.24 is a system configuration view in the case of recording the contents for the reproduction device to a recording media and distributing the recording media.
FIG.25 shows embodiment in the case of configuring a system having directly connected the portable recording media 500 and the reproduction device 230.
FIG. 26 shows other embodiment of a contents providing system.

### Explanation of the References

40---extensive communication part
42---request means
44---acquisition means
48---right state transmission means
50---right recording part
52---content recording part
54---reproduction part
56---near-distance communication part

### Description of the Embodiments

### A. first embodiment

### 1. The overall configuration of the system

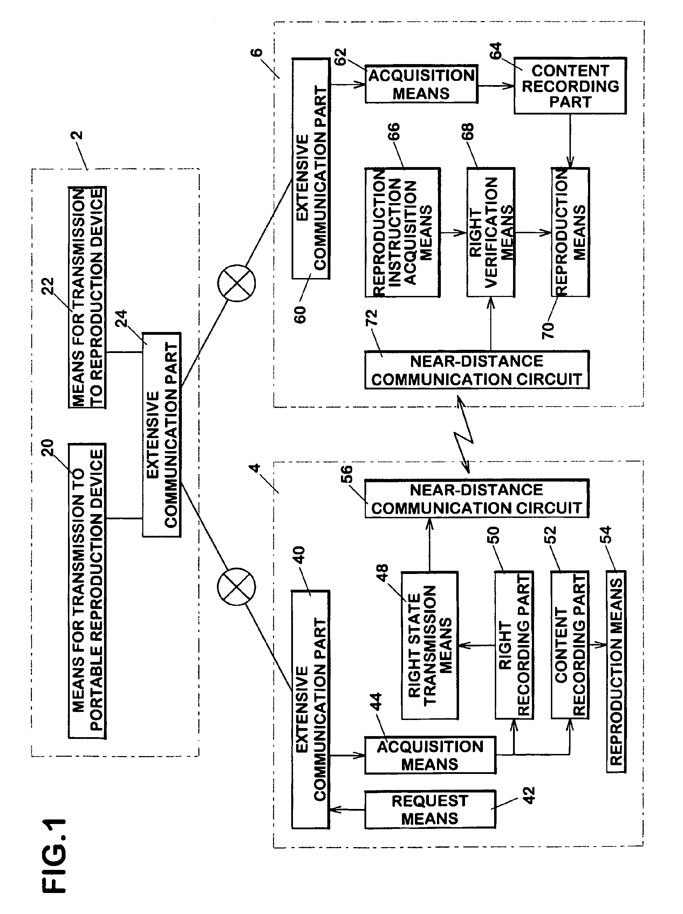

FIG. 1 shows a construction of contents providing system performed by one embodiment of this invention. The system comprises a server device 2, a portable reproduction device 4, and a reproduction device 6. The server device 2 and the portable reproduction device 4 comprise an extensive-distance communication part 24, 40 communicating through an extensive-distance communication network as internet. A reproduction device 6 comprises an extensive-distance communication part 60 communicating with the server device 2 through an extensive-distance communication network as internet.

Request means 42 of the portable reproduction device 4 transmits a request for purchase of the contents to the server device 2 as a right publication device through the extensive-distance communication part. The server device 2 received such request transmits contents and the right data for the portable reproduction device to the portable reproduction device 4 by the transmission method to portable devices 20. Acquisition means 44 of the portable reproduction device 4 receives the contents and the right data for the portable reproduction device through the extensive-distance communication part 40, and records each data to a content record part 52, a right record part 50.

The portable reproduction device 4 reproduces the contents for the portable reproduction device recording at the content record part 52 by the reproduction method 54. This enables for a user to show the purchased contents by the portable reproduction device.

Otherwise, means for transmission 22 to portable reproduction of the server device 2 transmits the contents for the reproduction device to the reproduction device 6. Acquisition means 62 of the reproduction device 6 receives the contents through the extensive-distance communication part 60, and records the contents to the content record part 64.

When the portable reproduction device 4 and the reproduction device 6 establish the communication by the near-distance communication part 56, 72, a right state transmission means 48 of the portable reproduction device 4 transmits to the reproduction device 6 the right state data based on the right data recorded at the right record part 50.

Reproduction instruction acquisition means 66 of the reproduction device 6 receives the instruction to reproduce the contents for the reproduction device from the user. The right verification device 68 verifies whether the reproduction device 6 has the right for the contents instructed to be reproduced or not by the right state data transmitted from the reproduction device 4. The reproduction means 70 reproduce the contents for the reproduction device recording at the content record part 64 in the case that the reproduction device 6 has the right.

As described above, the portable reproduction device 4 can reproduce the purchased contents for the mobile device and the reproduction device 6 can reproduce the contents for the reproduction device subject to the condition that the portable reproduction device 4 having the right exists at the range that the portable reproduction device 4 can communicate with the reproduction device 6 by near-distance communication method.

In above embodiment, the right is acquired with charge. However, regardless of charge the right can be acquired. In the following description, we describe in the case of acquiring the right data with charge. Otherwise, regardless charge, this invention is applied to the common case of acquiring the right data.

### 2. Hardware construction

### 2.1 Hardware construction of portable reproduction device

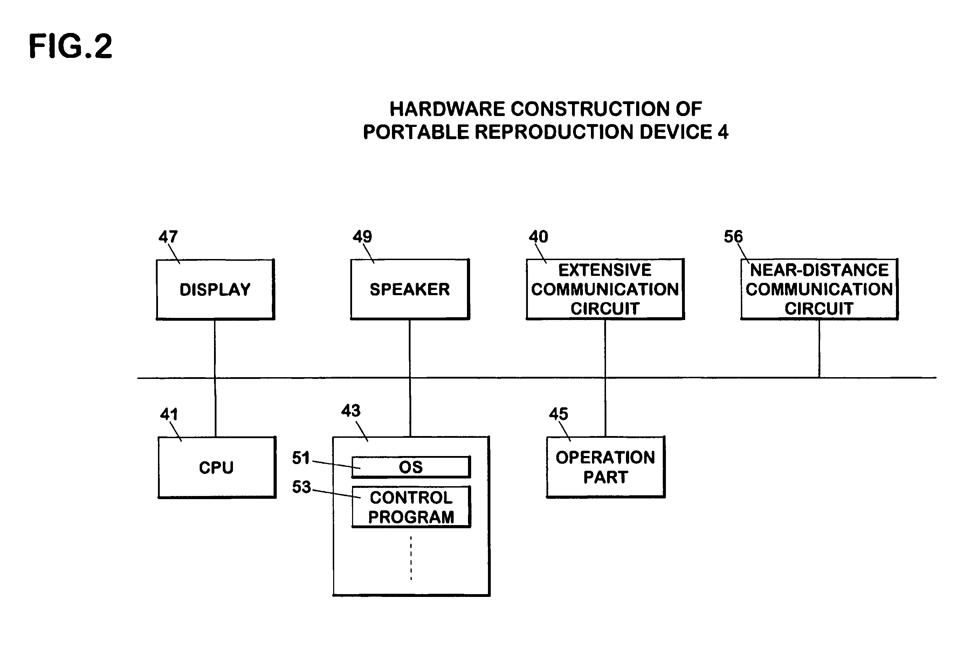

FIG. 2 shows a construction of a mobile phone 4 forming a portable reproduction device. Connected to a CPU 41 are a display 47, a speaker 49, an extensive communication circuit 40, a near-distance communications circuit 56, a memory 43 and an operation part 45. Other circuits so on for communication are omitted from the drawing for clarity.

The display 47 is used for displaying content for a mobile device and an operation screen and so on. The speaker 49 is used for outputting a content for mobile device as sound and outputting sounds generated through operations.

The memory 43, for example, is made of a non-volatile rewritable memory circuit (such as a P-ROM and so on) . An operating system (TRON (trademark) and so forth) 51 and control program 53 are recorded in the memory 43. Control program 53 fulfills its functions in cooperation with the operating system 51. It is possible to fulfill its functions by the control program 53 alone without preparation of any operating system 51.

The operation part 45 comprises cursor control keys, numeric key pads, typewriter keys and so forth for carrying out purchasing the right of a content (acquisition of the right), selection of a content, instruction for reproduction and so on.

### 2.2 hardware constitution of reproduction device

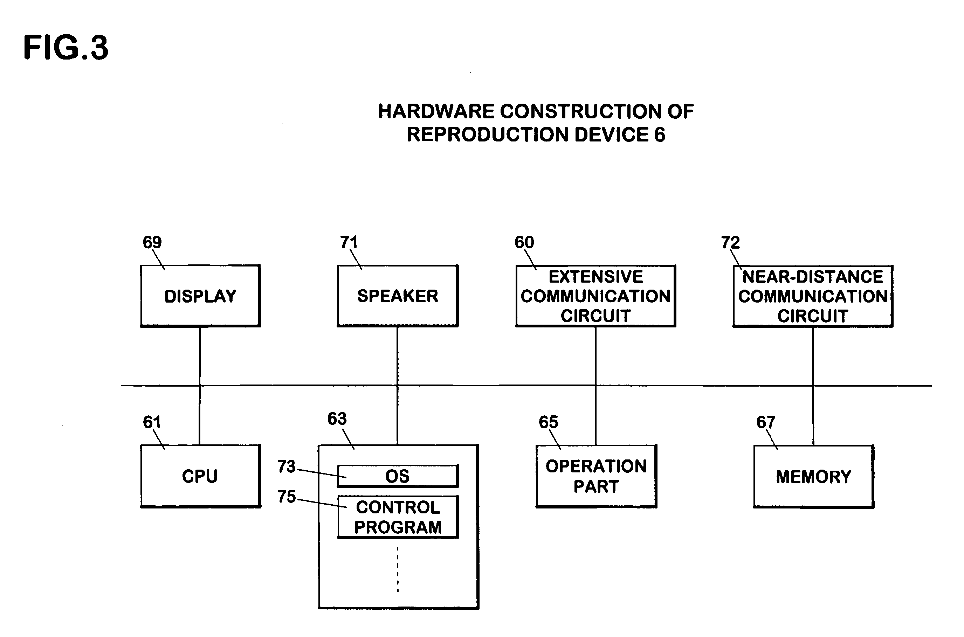

FIG. 3 shows a construction of a portable reproduction device 6. Connected to a CPU 61 are a display 69, a speaker 71, an extensive communication circuit 60, a near-distance communication circuit 72, a hard disk 63, an operation part 65 and a memory 67 and so forth.

The display 69 displays content for reproduction device and an operation screen and so on. The speaker 71 outputs a content for reproduction device as sound and outputting sounds generated through operations.

An operating system (Windows (trademark) and so forth) 73 and a control program 75 are recorded in the hard disk 63. The control program 75 fulfills its functions in cooperation with the operating system 73. It is possible to fulfill its functions by the control program 75 alone without preparation of any operating system 73.

The operation part 65 comprises cursor control keys, numeric key pads, typewriter keys and so forth for carrying out selection of a content, instruction for reproduction and so on.

The memory 67 is formed with a volatile memory and is used for work area of the CPU 61, a temporary storage such as status data of the right and so forth.

### 2.3 Hardware construction of server device

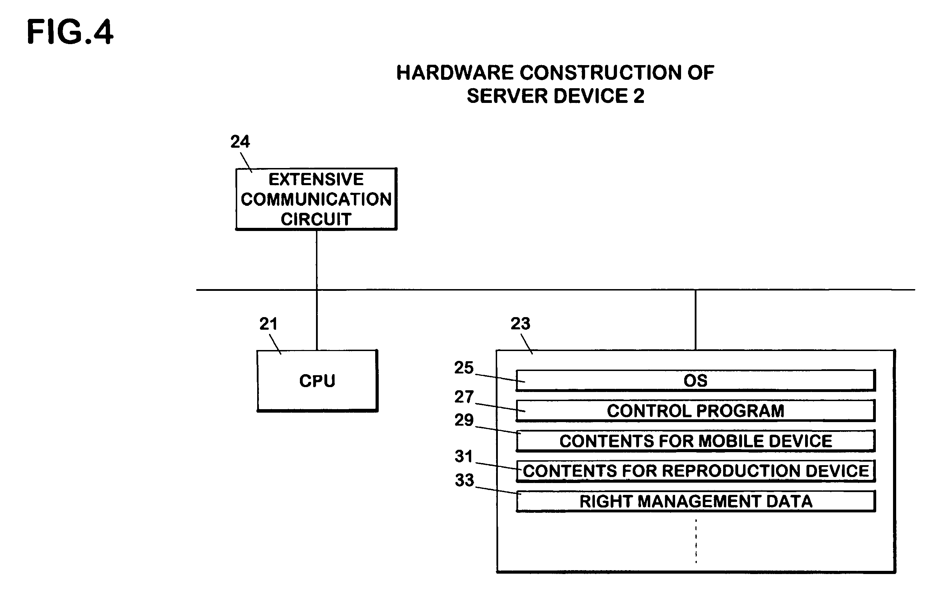

FIG. 4 shows a hardware construction of a server device 2. Connected to a CPU 21 are a hard disk 23 and an extensive communication circuit 24.

An operating system (Windows (trademark) and so forth) 25 and a control program 27 are recorded in the hard disk 23. The control program 27 fulfills its functions in cooperation with the operating system 25. It is possible to fulfill its functions by the control program 27 alone without preparation of any operating system 25.

In addition, contents for mobile device 29, contents for reproduction device 31, right management data 33 are recorded in the hard disk 23. The right management data 33 is data representing the status of rights for purchased contents for each user.

### 3. Content providing process

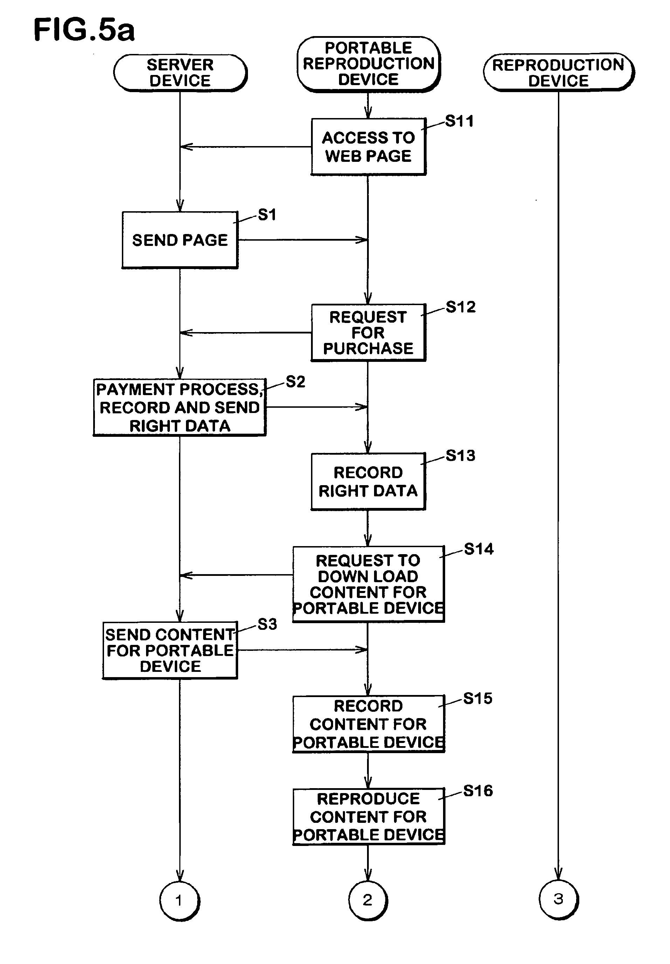

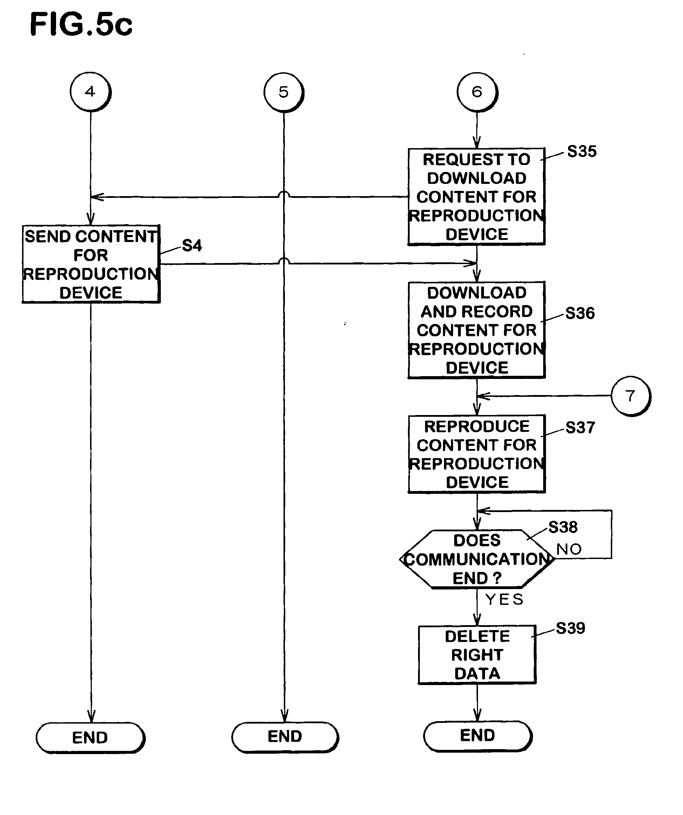

FIGS. 5a through 5d show flowcharts of control programs 27, 53 and 75, respectively recorded in the hard disk 23 of the server device 2, the memory 43 of the portable reproduction device 4 and the hard disk 63 of the reproduction device 6.

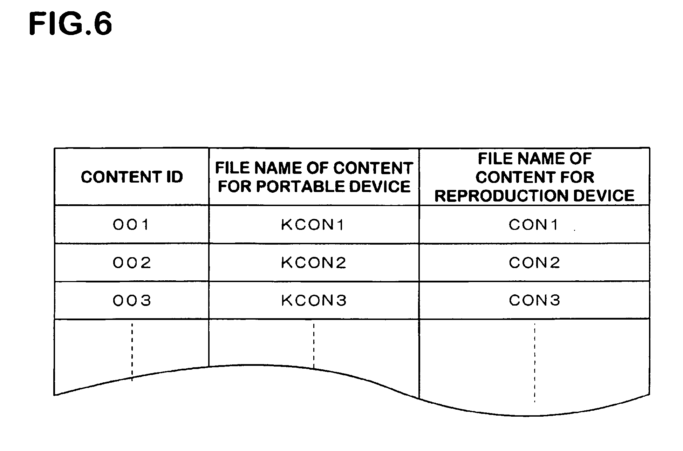

Plurality of contents is recorded in the hard disk 23 of the server device 2. Each of the contents is formed of a pair of the content for mobile device 29 and the content for reproduction device 31. Contents for the mobile device 29 and that for the reproduction device 31 forming a pair, are identical ones, but they differ from each other in that the former have lower resolution (smaller in screen size, lower pixel number and so on) for the portable reproduction device and the latter have higher resolution (larger in screen size, higher pixel number and so on). As shown in FIG.6, a contents table recording contents IDs, file names of contents for mobile device, file names of contents for reproduction device and so on are recorded in the hard disk 23. Although the title of the contents and purchase values thereof are not illustrated in the drawing, these and other details are described on the contents table.

Communications among the server device 2, the portable reproduction device 4 and the reproduction device 6 are carried out using encrypted data. In the below description describing processes, such processes are executed by one of the CPU 21 of the server device 4, the CPU 41 of the portable reproduction device 4 and the CPU 61 of the reproduction device 6 unless otherwise specified as process(es) carried out by the user's operation.

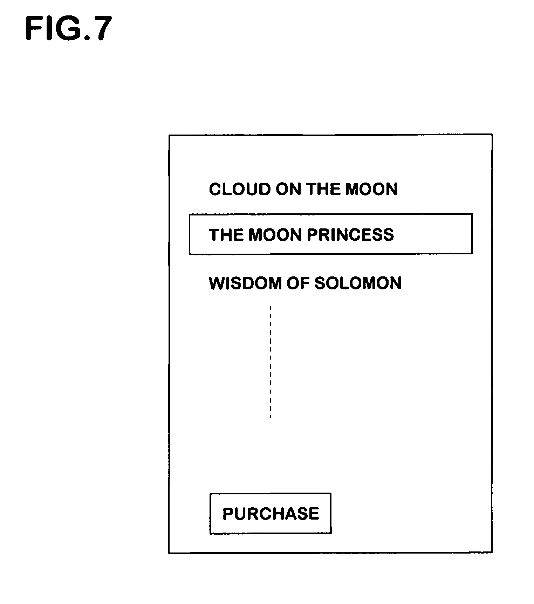

When a user purchases a content(s), access to the server device 2 is carried out by inputting a user ID, a pass word and so on by operation of the operation part 45 of the portable reproduction device 4 (step S11). The portable reproduction device 4 sends to the server device 2 a request for accessing thereto with its own address. As a result, the server device 2 generates a purchase screen shown in FIG. 7 with reference to the contents table illustrated in FIG.6 and transmits out the generated screen to the portable reproduction device 4 (step S1) At that time, the server device 2 transmits a content identifier for each of contents.

The portable reproduction device 4 displays the purchase screen on the display 47. The user selects a desired content(s) with the operation of the operation part 45. Because of such operation, a request of purchasing the selected content (s) is sent to the server device 2 (step S12). The content identifier of the selected content is transmitted so that it is contained in the request.

Upon receipt of the purchase request containing content identifier, process for payment is carried out at the server device 2. For example, a purchase value corresponding to a content identifier is settled by communicating with a management server of a bank or a credit agent both registered previously corresponding to each user ID.

A folder recording the status of the rights is provided for each user in the hard disk 23 of the server device 2, the right data for all of contents are recorded in the folder. The server device 2 makes its flag from "not-yet-purchased status" to "already-purchased-status" for the purchased right data, which has recorded in the folder storing the right for such a user (Step S2).

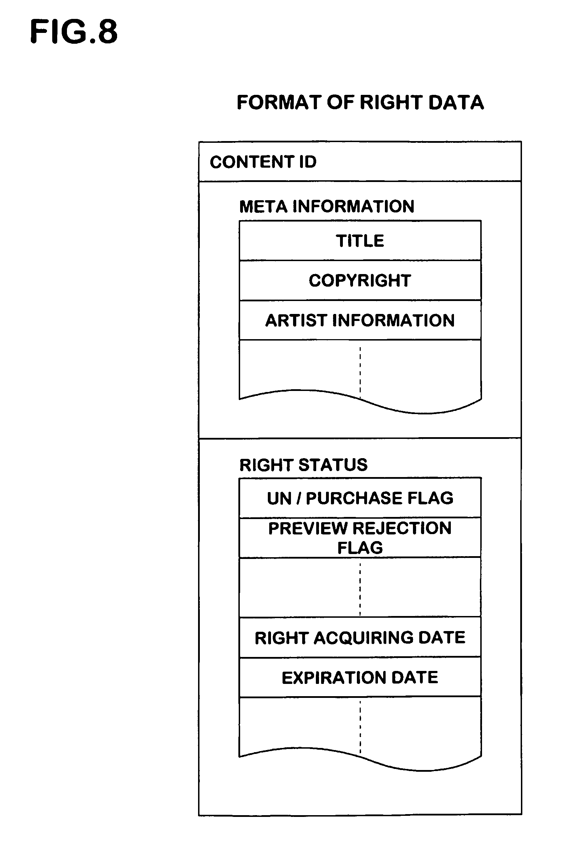

FIG. 8 shows data format of the right data. By making a flag, which represents one of purchasing-right-status/not-yet-purchasing status into "purchasing", structure, the status becoming to one having the right? The date of acquisition and the expiration date thereof are recorded in the right status.

The server device 2 transmits to the portable reproduction device 4 all the right data recorded in the right folder for the user (step S2). The portable reproduction device 4 records the received right data into the memory 43 (step S13). This right data has kept even after the power-off of the portable reproduction device 4. The server device 2 may transmit only the right data of the purchased content(s) without transmitting all the right data.

Subsequently, the portable reproduction device 4 transmits content identifier of the purchased content (s) to the server device 2 and requests for downloading of content for portable reproduction device (step S14). As a result, the server device 2 transmits to the portable reproduction device 4 a content (s) for portable reproduction device (step S3). If content for portable reproduction device has already been recorded in the portable reproduction device, the request for downloading may not be sent by the portable reproduction device 4.

The portable reproduction device 4 records the received content for the portable reproduction device into the memory 43 (step S15). The content for portable reproduction device can be reproduced with operation of the operation part 45 by the user (step S16). At that time, on receipt of instruction for reproduction from the user portable reproduction device 4 permits the reproduction only when it has the right for the content.

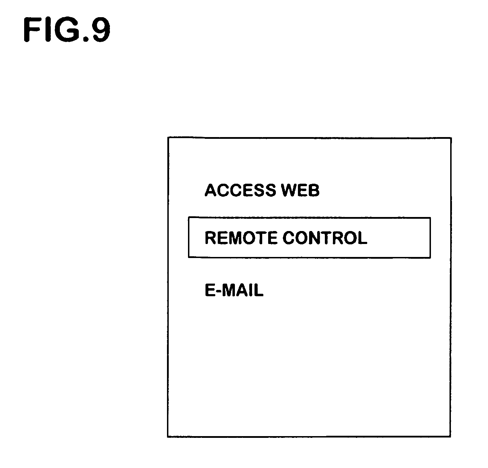

Subsequently, the case in which the purchased contents are reproduced by the reproduction device 6 will be described. At first, a user approaches vicinity of the reproduction device 6 (within a range that near-distance communications between the devices is allowed) with the portable reproduction device 4 and the portable reproduction device 4 starts communication with reproduction device 6 as a result of operation of the operation part 45 (step S17). Specifically, the communications start by selecting modes of a remote controller as shown in Fig. 9.

If, no reproduction device 6 exists at vicinity of the portable reproduction device 4, no communication is established because near-distance communications between the devices cannot be carried out.

Once the communications have been established between the devices, all the right data recorded on the memory 43 is sent to the reproduction device 6 (step S18). Upon receipt of such data, the reproduction device 6 memories them into the memory 67 (step S31).

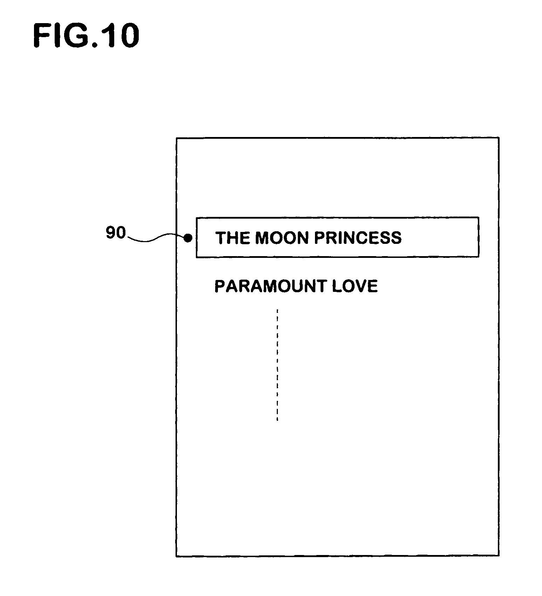

The portable reproduction device 4 displays a list of contents on the display 47 in accordance with the recorded the right data (step S19). At that time, the portable reproduction device 4 distinguishably displays the contents having its right (its flag is in "purchased" state) and the content having no right (its flag is in "not-yet-purchased" state). As to the contents having its right, an indication 90 for distinguishing the right is added thereto as shown in FIG. 10, for example.

The user selects the content displayed on the screen by operating the operation part 45. In this way, the portable reproduction device 4 transmits out to the reproduction device 6 an instruction for reproduction that clearly indicates a content identifier of the selected content (step S20).

The reproduction device 6 refers to the right data on the right recorded on the memory 43 and determines whether or not the right of the content to which an instruction for the reproduction is made, in other words whether or not the flag of such content is in "purchased" state (step S32). Once, it is determined that no right for the content exist, process for proposing purchase of the right (step S33) is carried out.

The reproduction device 6 determines whether or not contents for the reproduction of the content, to which the reproduction instruction is made, is recorded on the hard disk 63 when it determines that the right for the content exist (step S34) . Reproduction of the content for reproduction is executed when such content is recorded in the reproduction device 6 (step S37). Such reproduction of the content for reproduction is carried out using a program for reproduction and circuit.

A request for downloading the content is sent to the server device 4 when no content for reproduction is recorded (step S35), and stores the downloaded content into the hard disk 63 (steps S4, S36). Thereafter, the content for reproduction device is reproduced (step S37).

Upon completion of the reproduction, the reproduction device 6 determines whether communication with the portable reproduction device 4 is finished (step S38). The completion of communication can be determined by detecting the following cases: a notification of the end of communication is received, no response for calls that is made under near-distance communications from the reproduction device 6 to the portable reproduction device 4 (such that the portable reproduction device 4 stands far from the reproduction device 6, and that a remote control mode is deactivated).

Once completion of communication is detected, the reproduction device 6 erases the right data temporally recorded in the memory 67 (step S39).

Hence, there is no possibility to reproduce content when no portable reproduction device 4 having the right of the content is located in vicinity of the reproduction device 6. In this way, only the authorized right owner of the content can reproduce the content if the content is duplicated illegally.

In addition, if a person holds a portable reproduction device 4 having the right of a content, the right can be verified under near-distance communications and the verified content can be reproduced on the reproduction device 6 by which even other person downloads such contents. In other words, the content for reproduction device can be reproduced even with the reproduction device 6 by which other person download thereon the content even if someone holds the portable reproduction device 4 recording the right of such content.

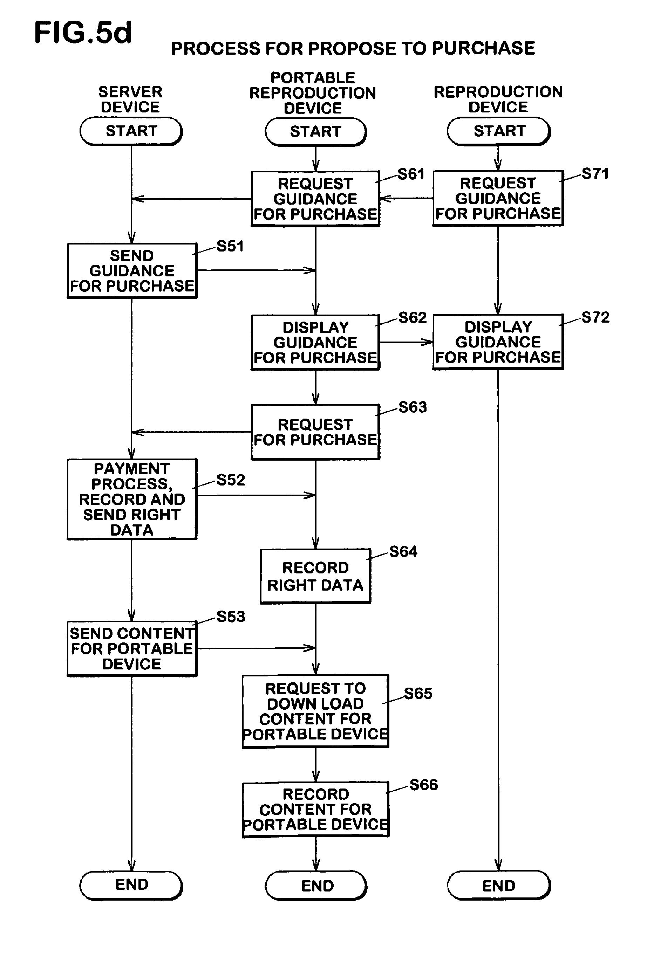

Subsequently, "process for proposing purchase of the right" which is carried out in the case of not having the right of content at step S32 will be described. FIG. 5d shows a flowchart of the process for proposing purchase of the right.

The reproduction device 6 refers to the right data and transmit a request for guidance of purchasing containing a content identifier of the content to the portable reproduction device 4 when it has no right for the content to which an instruction for reproduction is sent (step S71). The portable reproduction device 4 receiving the request transfers such request to the server device 2 (step S61). Upon receipt of the request for guidance of purchasing, the server device 2 specifies the content by its content identifier and generates a purchase guidance screen, and transmits it out (step S51).

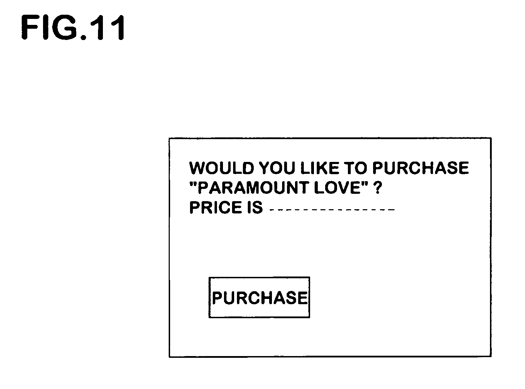

The portable reproduction device 4 displays the guidance screen thus received on the display 47 (step S62) . An example of such screen is shown in FIG. 11. The portable reproduction device 4 transfers the purchase guidance screen to the reproduction device 6. In this way, such purchase guidance screen is displayed on the reproduction device 6 (step S72).

The portable reproduction device 4 transmits to the server device 2 a request for purchase containing a content identifier once a user clicks the purchase button using the operation part 45 (step S63) . Hence, process for purchasing the right similar to that described at steps S2, S13, S14, S3 and S15 is carried out (steps S52, S64, S65, S53 and S66).

Purchase of the right is thus carried out and reproduction of the content to which an instruction for reproduction is sent is carried out (step S34 and thereafter)

### 4. Other embodiment

### 4.1 Download of content

In the above-described embodiments, a content for mobile device is automatically be downloaded from the server device 2 at the purchase of the right thereof, but such content may also be downloaded manually by a user's operation.

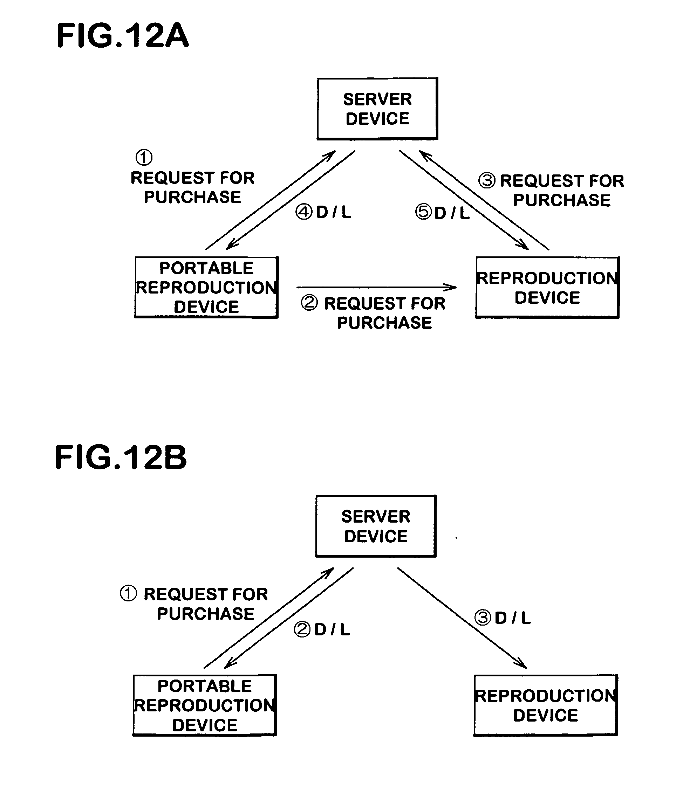

In addition, content for reproduction device may automatically be downloaded into the reproduction device 6 at the purchase of the right thereof. In that case, process may also be carried out as shown in FIG. 12A. Communications between the portable reproduction device 4 and the reproduction device 6 is carried out by near-distance communications and that between the portable reproduction device 4 and the server device 2 and that between the reproduction device 6 and the server device 2 are executed by extensive communications.

The portable reproduction device 4 transmits a request for purchase to the server device 2. At that time, the portable reproduction device 4 transmits to the reproduction device 6 the purchase request (at least containing content identifier for the content to be request by the request) as well. The reproduction device 6 transfers the request to the server device 2 with its own address. The server device 2 carried out payment process upon receipt of the request for purchase from the portable reproduction device 4 and the reproduction device 6 (or that from one of them). Subsequently, the server device 2 downloads the content for mobile device and that for reproduction device into the portable reproduction device 4 and reproduction device 6 respectively.

Alternatively, processes shown in FIG. 12B may be carried out. A user specifies an address of the reproduction device 6 in which content for reproduction device is downloaded at the time of transmission of a purchase request by operating the portable reproduction device 4. The address of the reproduction device 6 may be recorded previously in the portable reproduction device 4, but it may be located with the portable reproduction device 4 under near-distance communications.

In other words, the portable reproduction device 4 makes an inquiry whether or not a reproduction device exists at the time of transmitting a purchase request. If there is no reproduction device 6 within a range where near-distance communications between these devices, no response from the reproduction device 6 can be received. The portable reproduction device 4 transmits the purchase request to the server device 2 if there is no response from the reproduction device 6.

On the other hand, a response can be received when the reproduction device 6 exists within such range. The portable reproduction device 4 acquires its address from the reproduction device 6 and transmits to the server device 2 a purchasing request together with the acquired address.

The server device receiving the request let the portable reproduction device 4 download a content for mobile device thereon and let the reproduction device 6 download a content for reproduction device thereon.

Description on the cases where download of a content for reproduction device onto the reproduction device 6 that of a content for mobile device onto the portable reproduction device 4 have been made automatically in response to their purchase request in the above-described embodiments. However, such download can be carried out arbitrarily by the user's operation of the portable reproduction device 4 and/or the reproduction device 6 regardless of pre-purchase and post-purchase. In this embodiment, no problem occurs even when content itself is downloaded before the purchase of the right because the right needs to be recorded in the portable reproduction device 4 to reproduce such content. In the case of attempting reproduction for a content without any right (no purchase of the right has been done on the portable reproduction device and no reproduction device recording the right therein exists in vicinity of the reproduction device), such reproduction is completely banned or just a partial reproduction (a preview) is allowed.

In the above-described embodiments, the reproduction device 6 acquires content for reproduction device from the server device 2 through downloading. However, the reproduction device 6 may acquire the content for reproduction device with a portable recording medium such as CD-ROMs and so on.

Further, the content for reproduction device recorded in the reproduction device 6 is reproduced in the above-described embodiments. However, the content for reproduction device transmitted from the server device 2 by streaming may be reproduced.

Although, the content consists of image data in the above-described embodiments, such content may also be audio data and/or character data.

### 4.2 Transmission of right data

In the above-described embodiments, all the right data of contents are transmitted from the server device 2 to the portable reproduction device 4. Alternatively, only the right data for purchased contents may be transmitted. In addition, the right data transmitted from the portable reproduction device 4 to the reproduction device 6 may only be the right data for purchased contents. In that case, just the purchased contents are displayed on the display screen shown in FIG. 10.

The right data can be downloaded again by performing user verification by way of access to the server device 2 in the case of erasing right data at the portable reproduction device 4 by error or losing the portable reproduction device 4 somewhere.

### 4.3 Instruction for reproducing content for reproduction

In the above-described embodiments, an instruction for reproduction is sent from the portable reproduction device 4 to the reproduction device 6. Alternatively, such instruction may be provided from the operation part of the reproduction device 6. In addition, such instruction for reproduction may also be provided from a remote controller for the reproduction device 6.

In the above-described embodiments, the right data itself is sent from the portable reproduction device 4 to the reproduction device 6. Instead of the right data itself, the data indicating presence or absence of the right generated according to the right data may be sent thereto.

In the above-described embodiments, reproduction is permitted upon confirmation of the right of contents based on the right data. Alternatively, it is possible to encrypt contents for reproduction device and to provide a key for decrypting to the reproduction program (reproduction circuit) only when the confirmation of the right on contents is obtained.

### 4.4 portable reproduction device

In the above-described embodiments, content for portable reproduction device is reproduced on the portable reproduction device 4 using the portable reproduction device 4. Alternatively, the content for portable reproduction device may not be downloaded on the portable reproduction device from the server device 2. In that case, the portable reproduction device 4 has a capability as a right verification device.

### 4.5 Determination of permission for reproduction

In the above-described embodiments, the reproduction device and/or the portable reproduction device determine whether or not either device has a right on the content to which an instruction for reproduction being sent and if either device has a right on the content, reproduction of the content is permitted. In other words, right data contains a record whether or not it has the right on the corresponding content.

Alternatively, it is possible to notify terms of reproduction such as a reproducible device ( a television, a car navigation device, a mobile device and so on) and a reproducible periods and may determine whether or not a content is reproducible according to the terms.

In addition, the terms of such determination may be changed such as unconditionally permit reproduction, not permit reproduction unless purchasing the right in response to accuracy of a content (bit rates and the like), whether or not it is encrypted, whether or not the user is a member of a specific membership society.

### 4.5 Portability of right data

In the above-described embodiments, a right recording part is provided inside of the portable reproduction device 4 that is used as a right verification device. Therefore, only the owner of the portable reproduction device 4 themselves can reproduce the content. Since it is uncommon to lend the portable reproduction device 4 to other person, such structure prevents illegal reproduction of the content. However, this leads to a problem that purchase of the right exceeds a memory capability of the portable reproduction device 4 cannot be carried out.

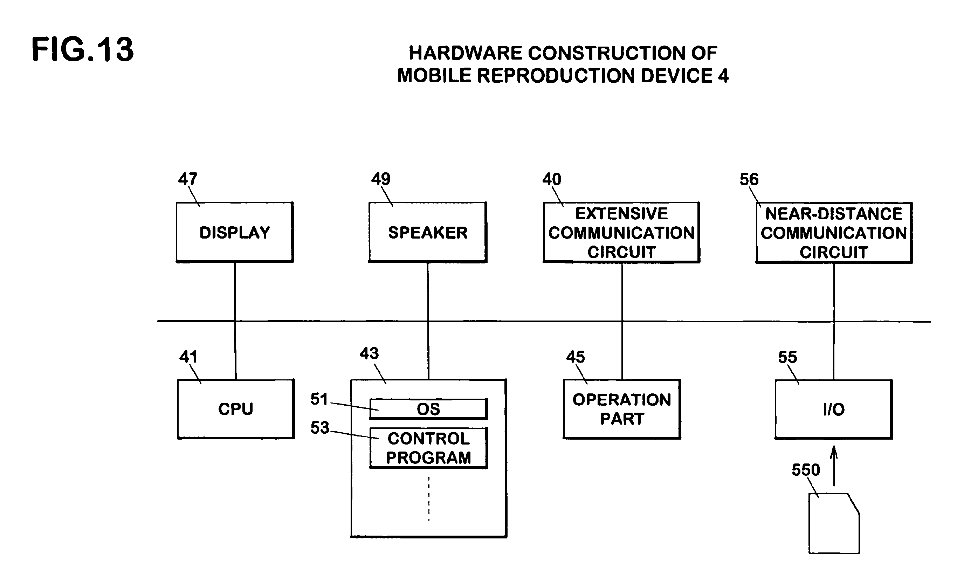

In order to resolve such problem, the right data is recorded in a portable recording medium 550 such as SD card(trademark) in the embodiment shown in FIG. 13. This enables the portable reproduction device to store more of the right data by replacing the portable recording medium 550.

In FIG. 13, an interface 55 is used for connecting the portable recording medium 550 with the CPU 41. Alternatively, the right data can be recorded in the portable recording medium 550 as it is, but, in that case, there is a possibility of illegal use because other mobile phone can use the right data if the portable recording medium 550 is in hand. To avoid such circumstance, the right data is encrypted with individual identification number of each portable reproduction device 4 and is recorded accordingly.

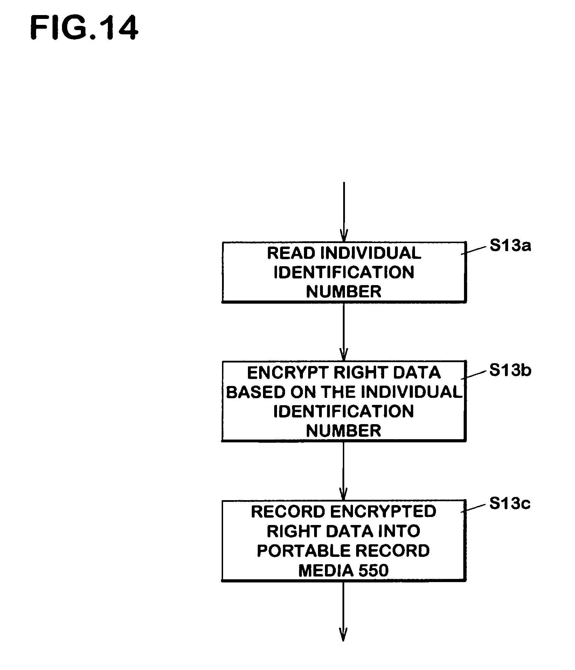

The process for purchasing a content described in this embodiment is basically similar to that shown in FIG. 5a. However, the process carried out at step S13 (recording the right data) of FIG. 5a is changed to the ones shown in FIG.14. In the process, initially the CPU 41 reads individual identification number provided by the portable reproduction device 4 (or provided by the user) once the right data is transmitted from the server device 2 (step S13a). Such individual identification number is usually recorded in hardware or in an attachment such as a memory card to be mounted to the portable reproduction device 4.

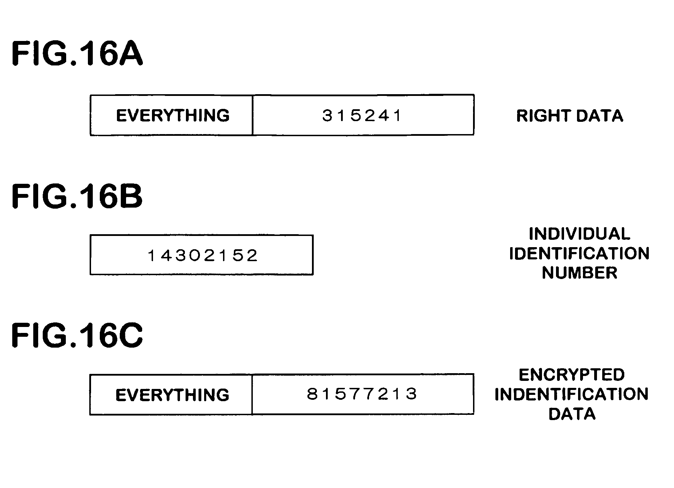

Subsequently, the CPU 41 encrypts the received right data in accordance with the acquired individual identification number. For example, it is assumed that a right data shown in FIG. 16A is transmitted from a server. Here, an example will be described, assuming the case that only the right data of the purchased content has been transmitted.

The CPU 41 converts the right data to reversible signals in accordance with the individual identification number shown in FIG. 16B and acquires encrypted right data illustrated in FIG. 16C (step S13b) . A widely known method can be employed to the algorithm of such encryption. In an example shown in FIG. 16C, no ending is carried out for a part of the title of right data (a part indicating "everything"), only a part of a content code (a part representing "315241") is encrypted. Alternatively, such encryption can be carried out so that the part includes the part indicating the title.

The CPU 41 records the encrypted right data into the portable recording medium 550 (step S13c).

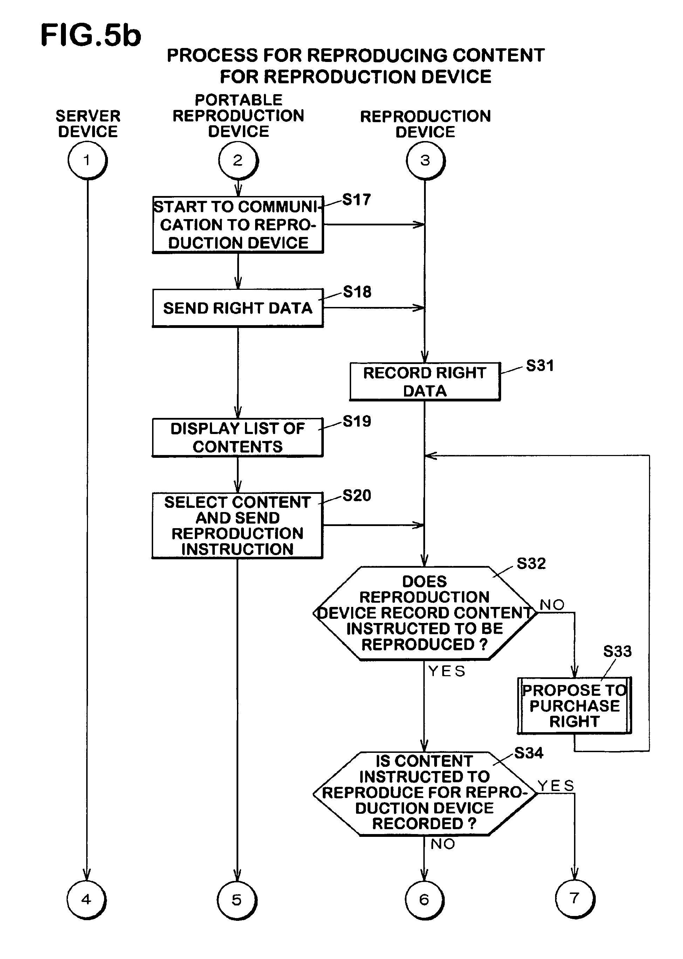

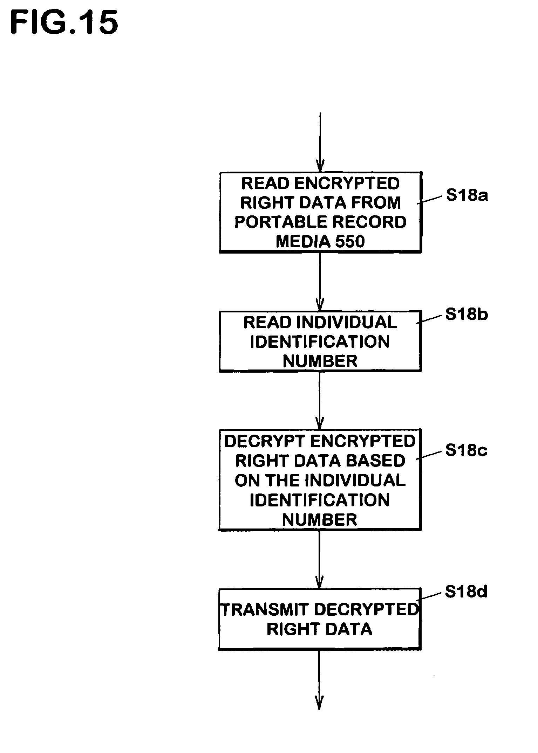

The process for reproducing a content in accordance with the right data recorded in the portable recording medium 550 is basically similar to that shown in FIG. 5b. But the process carried out at step S18 (transmitting the right data) is different from that shown in FIG.15.

The CPU 41 reads out the encrypted right data from the portable recording medium 550 once the communication to the reproduction device 6 is established (step S18a). If, plural pieces of right data are recorded, all the right data are read out. Next, the CPU 41 reads out the individual identification number of the portable reproduction device 4 (step S18b). Subsequently, such encrypted right data is decrypted using the individual identification number (step S18c) . Further, the CPU 41 transmits the decrypted right data to the reproduce device 6 (step S18d).

According to such embodiment, an attempt to reproduce the content at the reproduce device 6 using another portable reproduction device 4 different from the portable reproduction device 4 used for purchasing the right fails to reproduce the proper right data because the individual identification numbers are different between there. In this way, it is possible to avoid illegal reproduction of contents.

In the above-described embodiments, the right data is encrypted with the individual identification number and resultant data is recorded on the portable recording medium 50. Alternatively, data combining the right data and the individual identification number may be recorded on portable recording medium 50. In that case, it is also possible to avoid illegal reproduction by determining illegal right data if the individual identification numbers do not agree.

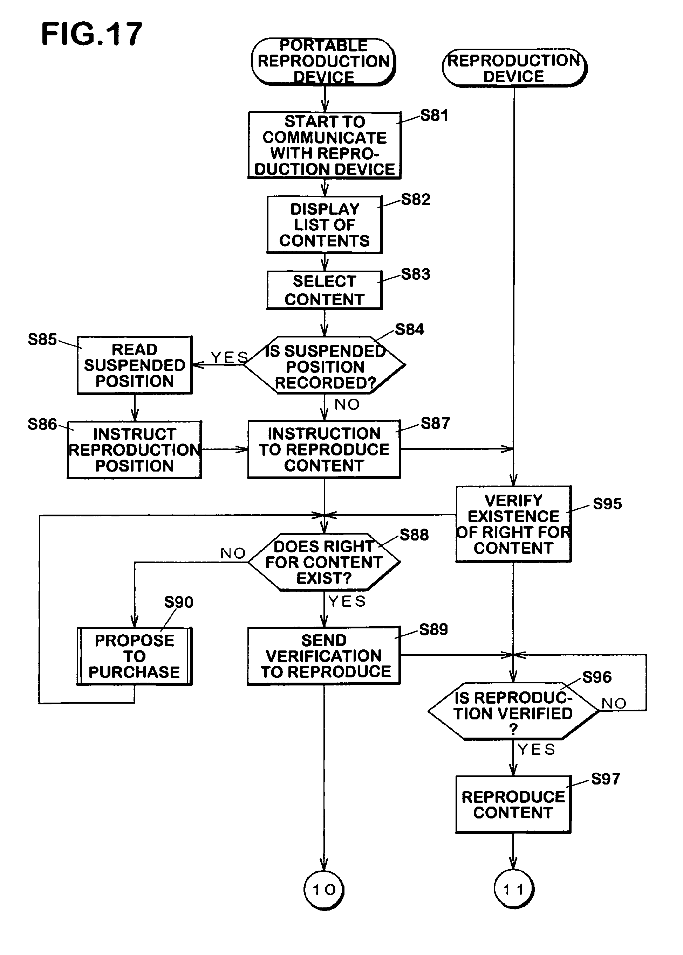

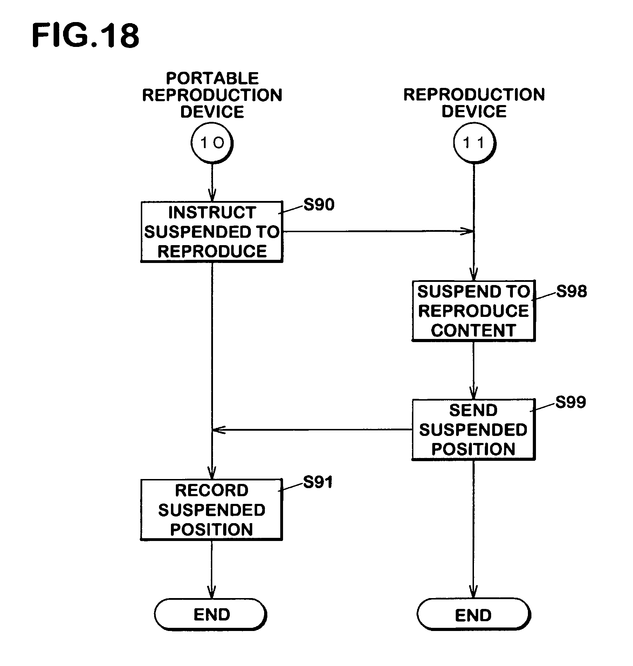

4.6 reproduction at the suspended position FIGS. 17 and 18 shows a flowchart of system capable of reproducing from the suspended position of content(s) with the same of different reproduction devices, the suspended position of the content for reproducing at the reproduction device 6 recorded. According to this embodiment, it is possible to avoid illegal reproduction because only the proper right-holder can reproduce the content and to build system capable of reproducing the content with different reproduction device as long as holding the right data thereof.

At first, a user accesses to the vicinity of the reproduction device 6 (within a range that near-distance communications between the devices is allowed) holding the portable reproduction device 4 and initiates the communication to the reproduction device 6 by operating the operation part 45 (step S81). Such initiation for communication is carried out, specifically, by selecting a remote control mode as shown in the screen of FIG.9. The near-distance communications may automatically be started by accessing the portable reproduction device 4 to the reproduction device 6.

Subsequently, the CPU 41 of the portable reproduction device 4 reads out the recorded right data and displays a list of content (s) on the display 47 (step S82). When a user selects content by operating the operation part 45 (step S83), the CPU 41 determines whether or not a suspended position for the content is recorded (step S84). Here, description will be made on an assumption that no suspended position is recorded.

The CPU 41 transmits an instruction for reproduction to the selected content to the reproduction device 6 via the near-distance communications circuit 56 (step S87). The CPU 61 of the reproduction device 6 receiving such instruction transmits the confirmation of existence of the right of content to the portable reproduction device 4 (step S95) . There is no clear description on FIG. 17, such confirmation of existence of the right is made for each predetermined period (for example, for every five minutes, or for a random period) during the reproduction of the content. In this way, reproduction of the content is suspended at the time of the portable reproduction device 4 apart therefrom.

The CPU 41 of the portable reproduction device 4 receiving a request for confirmation of the existence of the right determines whether or not the right data of the content is recorded on the memory 43 (step S88). If the right data exists, Reproduction signal is transmitted to the reproduction device 6 (step S89) .

The reproduction device 6 performs reproduction of the content on receipt of the reproduction signal (steps S96, S97).

It is assumed that a user suspends reproduction of the content by operating the operation part 45 during reproduction of the content. Such suspension for the reproduction is sent to the reproduction device 6 (stepS90) . The reproduction device 6 receiving such instruction suspends the reproduction of the content (step S98). Subsequently, acquisition of the suspending position (for example, an elapsed time from the initiation of the content contained in the content data) is carried out and the acquired position is sent to the portable reproduction device 4 (step S99) . The CPU 41 of the portable reproduction device 4 receives the suspending position and records it correspondingly with its content ID on the memory 43.

Such recording of the suspending position may be carried out not only the case where a user inputs an instruction of suspending reproduction of the content by operating the operation part 45, but also the case where near-distance communication cannot be done because of the portable reproduction device 4 apart from the reproduction device 6. However, in this case, the position to be currently reproduced is always sent to the portable reproduction device 4 from the reproduction device 6 in a rather short period (such as every ten seconds or so) during the reproduction of the content. Then, the most current position of reproduction at the time of losing the communication is recorded on the portable reproduction device 4 as the suspending position.

Subsequently, process for reproducing the same contents again will be described. The steps S81 through S83 are identical to that described in the above. In step S84, the CPU 41 of the portable reproduction device 4 determines whether the suspending position is recorded on the memory 43 for the selected content.

Once the suspending position is recorded, the position is read out and designates it as a starting position of reproduction, and an instruction for reproducing the content is sent (steps S86, S87). The reproduction device 6 receiving such instruction start reproducing the content from the starting position. When the reproduction of the content has been done to the end, the reproduction device 6 notifies the fact to the portable reproduction device 4. The portable reproduction device 4 erases the suspending position upon receipt of the notification.

As described in the above, it is possible to reproduce the content that has been watched halfway from the suspended part in this above-described embodiment. Such functionality is seamlessly feasible even when another reproduction device 6is used.

### 4.7 Countermeasure to the apparatus which has no communication capability

In the above-described embodiments, the reproduction device 6 capable of performing either near-distance communications or extensive communications is used. If the reproduction device 6 itself does not have any communication capability, similar functionality to that of the above-described embodiments can be obtained by providing an external unit for communication thereto.

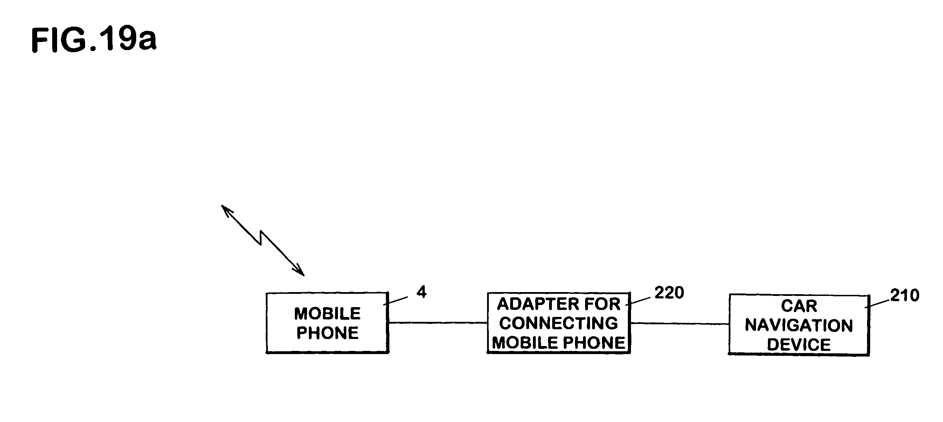

FIG. 19a shows a system construction that adopts the present invention in a car navigation device 210, which does not have a communication capability to the Internet. The mobile phone 4 (the portable reproduction device forming a right verification device) is connected to the car navigation device via an adapter for mobile phone 220.

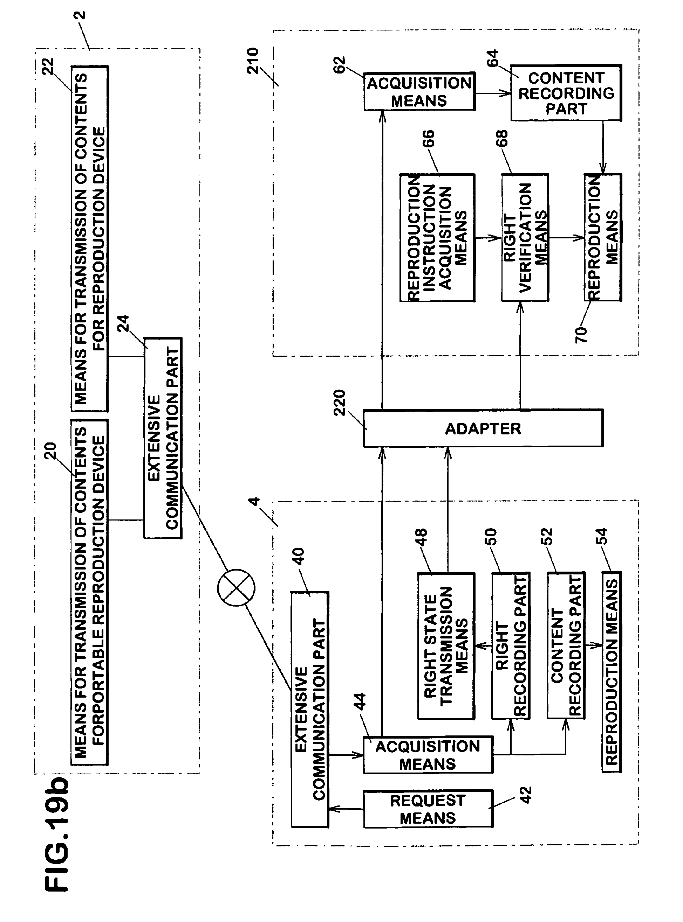

FIG. 19b shows a functional block diagram of the system shown in FIG. 19a. As illustrated in the drawing, the car navigation device 210 acquires a content for reproduction device from the server device 2 via the adapter 220 and the mobile phone 4. In other words, the contents for reproduction device acquired from the server device 2 by acquisition means 44 of the mobile phone 4 is acquired by acquisition means 62 of the car navigation device 210 via the adapter 220. At the time of reproduction, verification of the right is carried out under near-distance communications using the adapter 220.

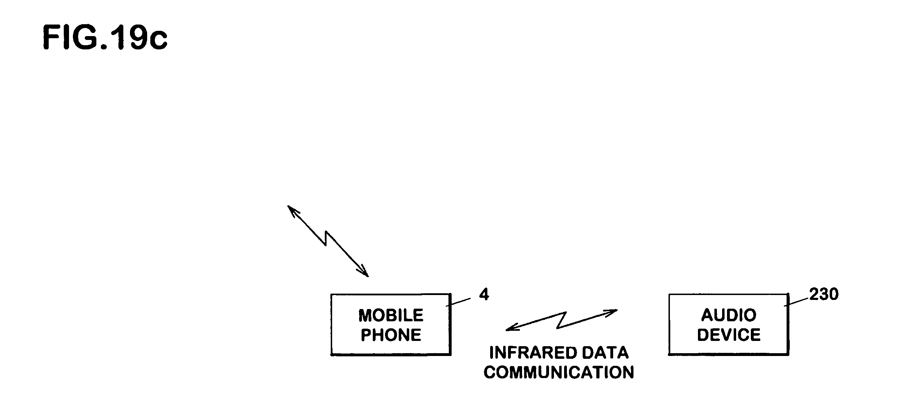

FIG. 19c shows a system construction that adopts the present invention in an audiovisual apparatus 230 (such as a stereo device and the like) that only has an infrared communication capability (near-distance communications). The mobile phone 4 and the audiovisual apparatus 230 can communicate with infrared communication.

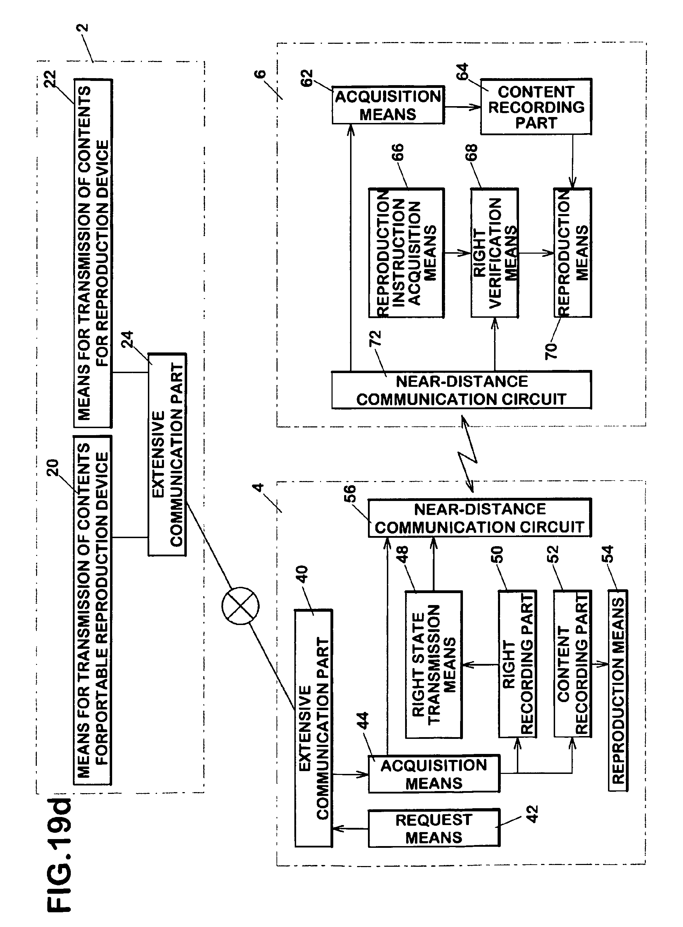

FIG. 19d shows a functional block diagram of the system shown in FIG. 19 c . As illustrated in the drawing, the audiovisual apparatus 230 acquires from the server device 2 a content for reproduction device. In other words, the content(s) for reproduction device acquired from the server device 2 by acquisition means 44 of the mobile phone 4 is acquired by acquisition means 62 of the audiovisual apparatus 230 with near-distance communication. At the time of reproduction, verification of the right is carried out under near-distance communications.

### 4.8 Other embodiment

In the above-described embodiments, an instruction for reproduction is provided forms the portable reproduction device to the reproduction device. Alternatively, such instruction can be provided by a reproduction button mounted on the reproduction device and a remote controller accompanied to the reproduction device and so on.

In the above-described embodiments, the portable reproduction device forming a right verification device acquires the right data by carrying out communication with the server device 2 through the Internet. Alternatively, it is possible to acquire the right data via data broadcasting such as one-segment broadcasting and from the server device through e-mail(s).

In addition, the right data is acquired from the server device 2 forming a right verification issuing device in the above-described embodiments. Alternatively, it is possible to use a PC recording right data to be a right verification issuing device and acquires the right data through near-distance communications (Toruca (trademark) and so on). In addition, it is possible to make another right verification device recording right data to be a right verification-issuing device and acquires the right data via extensive communications (so called P2P communications) or near-distance communications. Further, the right verification device may acquire right data through a portable recording medium.

In the above-described embodiments, some amount to be charged for purchasing right data, but the right data may also be acquired for free of charge.

### B. Second embodiment

### 1. Overall construction of system

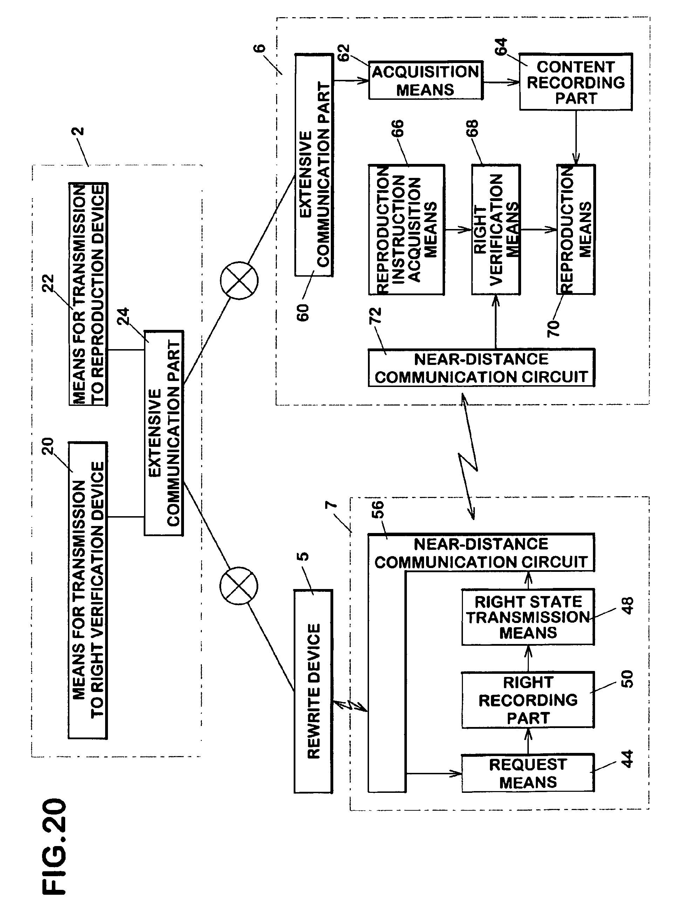

FIG. 20 shows an overall construction of a content providing system according to another embodiment. This system comprises a server device 2, a rewrite device 5, a right verification device 7, and a reproduction device 6. The right verification device 7 is, for example, a mobile phone which houses a noncontact type IC card, a non contact type IC (Felica (trademark) and so on) . The rewrite device 5 is used for rewriting recorded description of a right recording part 50 of the right verification device 7.

The server device 2 comprises an extensive communication part 24 and carries out communications via an extensive communications network such as the Internet. Another extensive communication part 60 provides to the reproduction device 6 and carries out communications between the server device 2 via an extensive communications network such as the Internet.

Acquisition means 44 of the right verification device 7 receives right data from means for transmission to portable reproduction device 20 of the server device 2 through the rewrite device 5. The acquisition means 44 of the right verification device 7 records the received right data on the right recording part 50.

Means for transmission to reproduction device 22 of the server device 2 transmits to the reproduction device 6 a content for reproduction device. Acquisition means 62 of the reproduction device 6 receives the content and records it on a content recording part 64 via the extensive communication part 60.

Once communications between the right verification device 7 and the reproduction device 6 through the near-distance communications has been established using the near communication part 56, 72, right state transmission means 48 transmits to the reproduction device 6 right state data in according to the right data recorded on the right recording part 50.

Reproduction instruction receive means 66 of the reproduction device 6 receives an instruction for reproduction for content for reproduction device by a user. Right verification means 68 determines whether or not the right of the content to which the instruction for reproduction exists in accordance with right state data transmitted from the right verification device 7. If determined that the right exists, reproduction means 70 reproduces the content for reproduction device recorded on the content recording part 64. If determined that no right exists, no reproduction is permitted.

As described in the above, a content for reproduction device can be reproduced subject to existence of the right verification device 7 having the right within a range that near-distance communications is allowed.

### 2. Hardware construction

### 2.1 Hardware construction of right verification device7

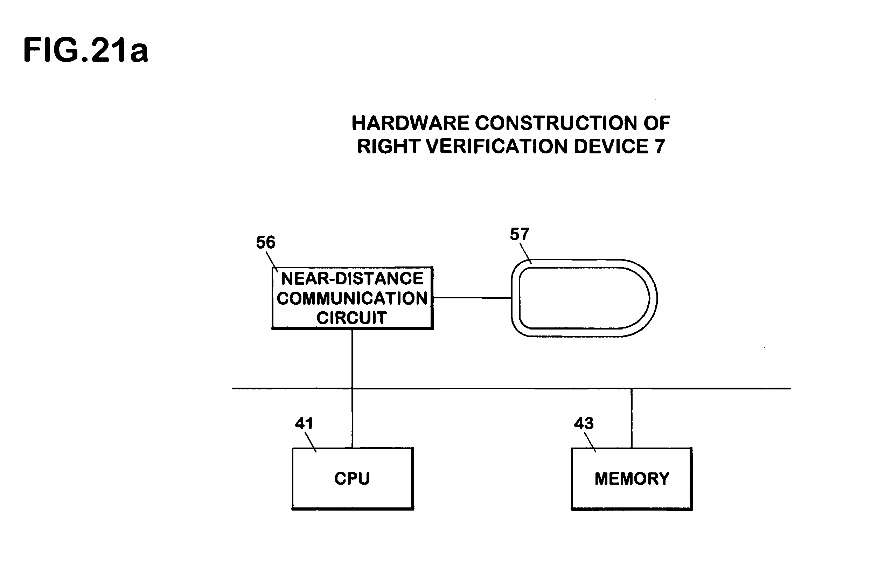

FIG. 21a shows a hardware construction of the right verification device 7. Connected to a CPU 41 are a memory 43 and a near-distance communications circuit 56. An antenna 57 is provided and electrical power is supplied thereto from the rewrite device 5 and the reproduction device 6 by accessing to the antenna that cause electromagnetic coupling. The antenna 57 is also used for near-distance communications circuit 56. Instead of such a passive construction, an active circuit construction having its own power supply may be employed.

A control program (not shown in Figure 21a) is recorded on the memory 43. In addition, right data is recorded on the memory 43.

### 2.2 Hardware construction of reproduction device 6, server device 2 and rewrite device 5

Hardware construction of the reproduction device 6, the server device 2 and the rewrite device 5 is similar to that of described in the first embodiment. However, the near-distance communications circuit 72 of the reproduction device 6 has a capability of supplying electrical power by electromagnetic coupling with the antenna 57 of the near-distance communications circuit 56.

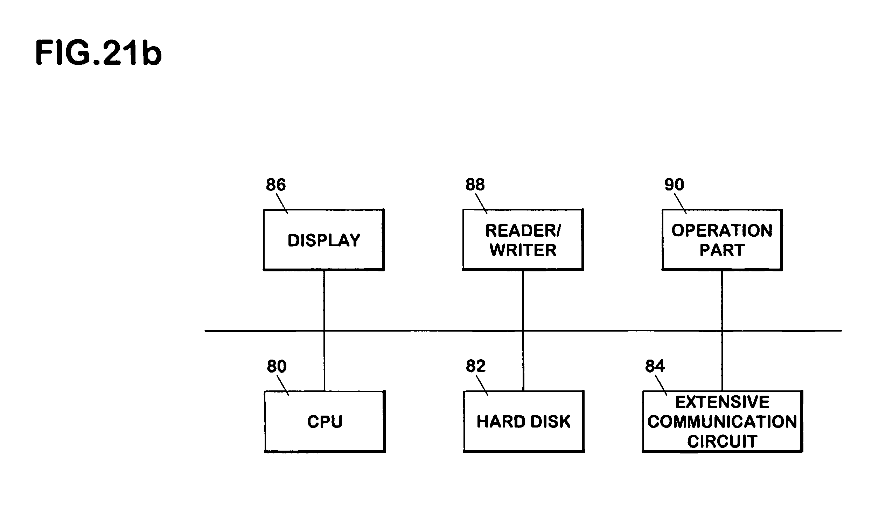

FIG. 21b shows hardware construction of the rewrite device 5. CPU 80 is connected to a hard disk 82, an extensive communication circuit 84, a display 86, a reader/writer 88 and an operation part 90. A program for control is recorded on the hard disk 82. The reader/writer 88 is an ordinary circuit (a reader/writer for Felica (trademark)) for carrying out rewriting of a passive type IC cards. The extensive communication circuit 84 is a circuit for carrying out communications with the server device 2.

### 3. Content providing process

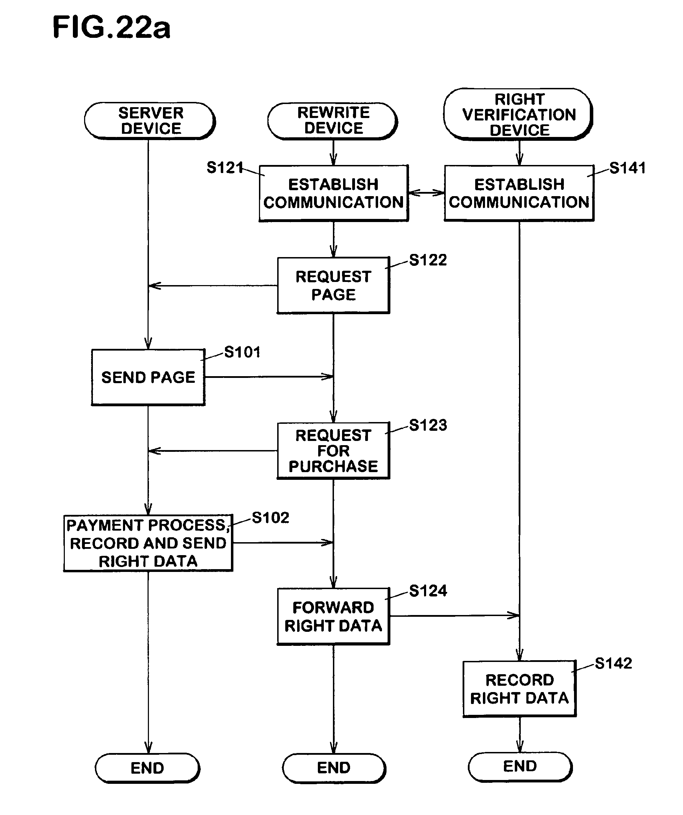

FIG. 22a shows a flowchart of processes for purchasing content. Communication is established, when the right verification device 7 is put closer to the reader/writer 88 of the rewrite device 5 and electrical power is supplied to the right verification device 7 (steps S121, S141). The rewrite device 5 requests to the server device 2 for a purchase screen upon establishing such communication (step S122). At that time, the rewrite device 5 reads out a user ID recorded on the right verification device 7 and transmits it to the server device 2. Upon receipt of the user ID, the server device 2 transmits the purchase screen (step S101). At that time, the server device 2 also transmits content identifiers of each of contents. The rewrite device 5 displays the purchase screen (see FIG.7) on the display 86.

One of an operator or a user selects a desired content by operating the operation part 90. In this way, the rewrite part 5 transmits to the server device 2 a purchase request of the content (step S123). Such purchase request is sent together with a content identifier of the selected content.

Upon receipt of the purchase request containing the content identifier, the server device 2 carries out process for payment. A folder storing the status of the rights is provided for each user in the hard disk 23 of the server device 2, the right data for all of contents are recorded in the folder. The server device 2 makes its flag from "not-yet-purchased status" to "already-purchased-status" for the purchased right data, which has recorded in the folder storing the right for such user (Step S102). Data construction of the right data is similar to that shown in FIG. 8.

The server device 2 transmits to the portable reproduction device 4 all the right data recorded in the right folder for the user (step S102). Then, the rewrite device 5 forwards the received right data to the right verification device 7 (step S124). The right verification device 7 records the received right data on the memory 43 (step S142) . The server device 2 may transmit only the right data of the purchased content instead of transmitting all the right data.

Right data is recorded on the right verification device 7 in the way described in the above. For reproducing the purchased content, put the right verification device 7 closely to the reproduction device 6 and an instruction for reproduction is sent thereto.

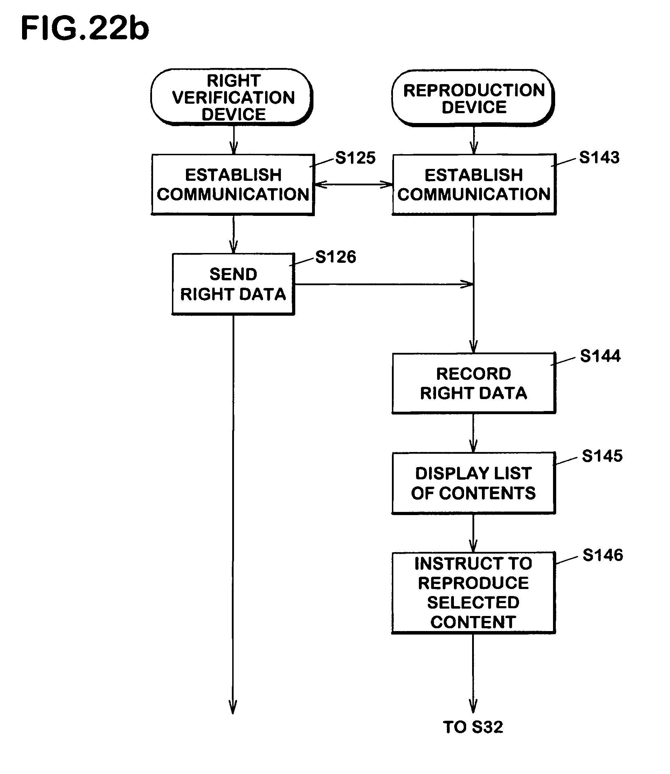

FIG. 22b shows a process flowchart for reproducing the content. Communication is established when the right verification device 7 is put closely to the reproduction device 6 (steps S125 and S143). Once the communication is established, the right verification device 7 reads out right data from the memory 43 and transmits it to the reproduction device 6 (step S126) . The reproduction device 6 receives the right data and records it on the memory 67 (step S144). Subsequently, the reproduction device 6 displays a list of contents on the display 69 based on the right data (step S145). This display screen is as shown in FIG. 10.

The user selects content by operating the operation part 65 and inputs an instruction for reproduction (step S146) . The processes carried out thereafter are similar to that of carried out after the step S32 of FIG.5b, thereby reproduction of the content is carried out.

### 4. Other embodiments

### 4.1 Application to wireless terminal

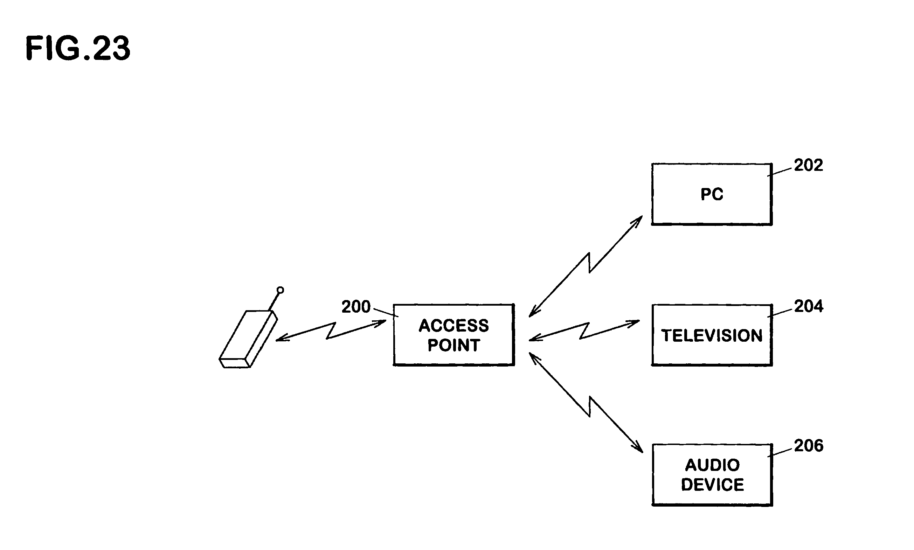

FIG. 23 shows an example of providing right verification means to an access point 200 of wireless LAN (near-distance communication device). The access point 200 is a main unit for forming a wireless LAN together with a PC 202, a television set 204, an audio instrument 206 and so on. In this embodiment, the access point 200 has a near-distance communication circuit 72 (for example, Felica (trademark)) for carrying out communications with mobile phones (the portable reproduction device 4 forming the right verification device) and further comprises the right verification means 68.

When the user provides an instruction for reproduction of the content at one of the PC 202, the TV set 204, and the audio instrument 206 (any of these to be the reproduction device) connected one another via the wireless LAN, the reproduction instruction for the content is sent to the access point 200. Then, the near-distance communication circuit 72 of the access point 200 carries out communication with a mobile phone for acquiring right data. The right verification means 68 determines whether the right data of the content, to which the reproduction instruction is made, exist or not and transmits the result of either of permitting or rejecting reproducing of the content to the PC 202, the TV set 204, and the audio instrument 206.

Hence, such process can carried out all at once without providing the near-distance communication part 72 and the right verification means 68 to each one of the instruments according to this embodiment. In this embodiment, the production instrument and the near-distance communication device forms the reproduction device.

### 4.2 Other

"Other embodiment" described in the first embodiment can further be applied to the second embodiment.

### III Third embodiment

In each of the embodiments described in the above, content for reproduction device is recorded on the reproduction device via the Internet and so on. Alternatively, such content can be recorded on a recording medium such as a CD-ROM and the like after encrypting and be distributed. In that case, right data contains a key for decrypting the encryption of the content.

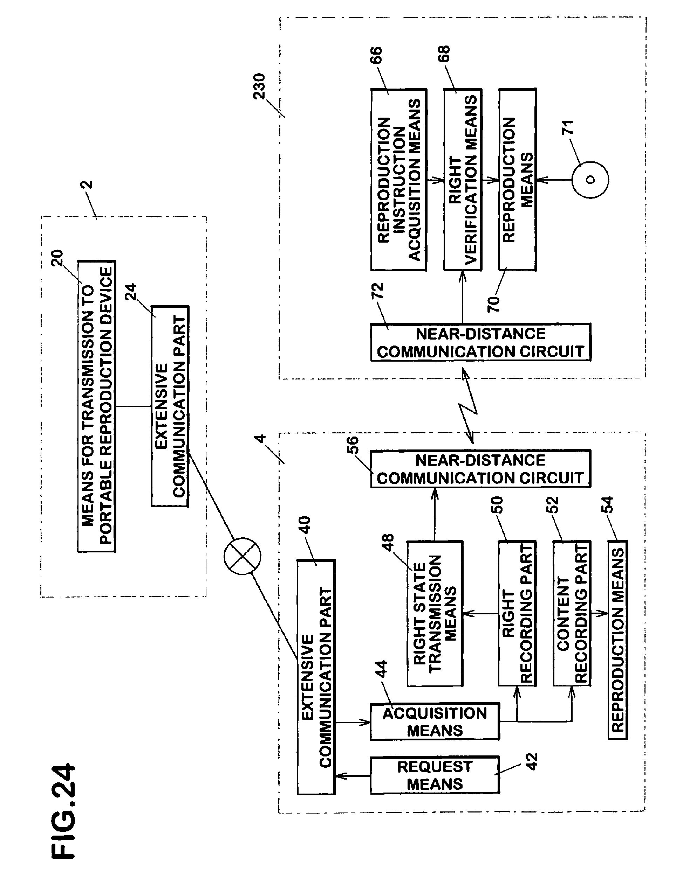

Specifically, content can be reproduced through authorization by carrying out a sequential process of: setting a CD-ROM and the like recording encrypted content to the reproduction device 6, and putting the right verification device (such as a mobile phone) 4 closely thereto. FIG. 24 shows an overall construction of this system.

The right state transmission means 48 reads out encryption keys recorded on a right recording part and transmits such keys to an audio instrument 230. The right verification means 68 passes the received encryption keys to the reproduction means 70. The reproduction means 70 decrypts the encrypted content recorded on a CD-ROM 71 using the encryption keys and reproduces the content.

As shown in FIG. 25, an interface for reading a portable recording medium 502 may be provided to the audio instrument 230 (or to other reproduction device). The user acquires right data from the server device 2 using the mobile phone 4 and so on and records the right data on a portable recording medium 500. Content (encrypted content) is purchased through the form of medium such as the CD-ROM 71 similar to the above.

In order to reproduce a content, the CD-ROM 71 is set to the audio instrument 230 and the interface 502 is connected to the portable recording medium 500 recording the right data corresponding to the content is connected. The right verification means 68 reads out the right data corresponding to the content to be reproduced (encryption keys) from the portable recording medium. Then, the means passes the encrypted keys thus read out to the reproduction means 70. The reproduction means 70 decrypts the encrypted content recorded on a CD-ROM 71 using the encryption keys and reproduces the content.

Both convenience of distribution and prevention of illegal use can be achieved by making reproduction of a content not being possible only with the content and making reproduction thereof being possible with both the content and the right data thereof as described in the above.

### C. Another embodiment

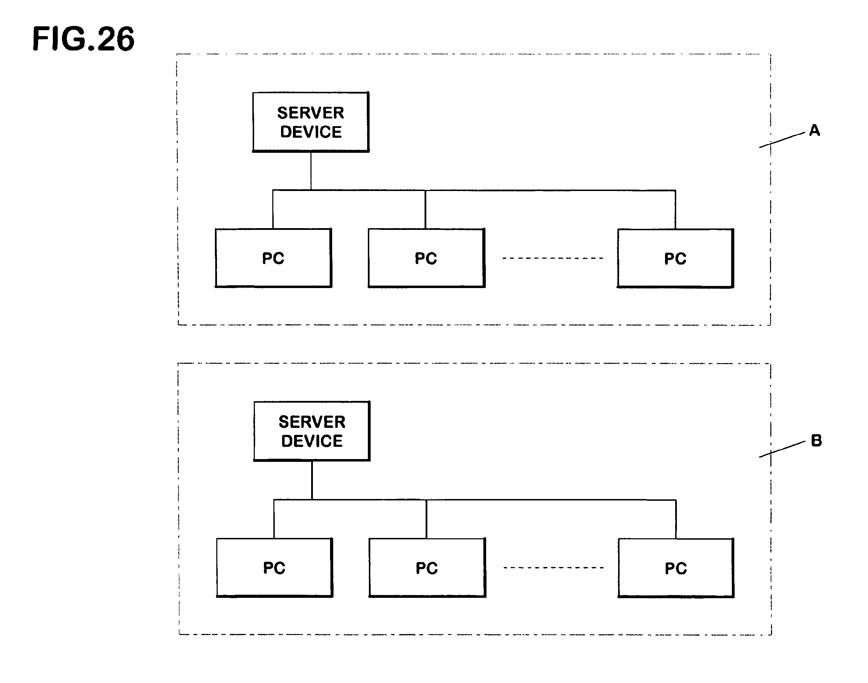

FIG. 26 shows another embodiment of a content providing device according to the present invention. In this example, PCs forming reproduction device are set on each of tables at stores A and B such as restaurant. Each PC is connected to the server device of each store.

A user visits the restaurant A with a portable reproduction device or a right verification device and one of the devices carries out communication with the server device, and a first right data is acquired one of the portable reproduction device or the right verification device. It is assumed that the content can be purchased free of charge. The user can view a first content recorded on the PC or the server device on the display of the PC using the first right data.

When the user visits the restaurant A again with the portable reproduction device or the right verification device, a second right data is acquired into one of the devices. The user can view a second content recorded on the PC or the server device on the display of the PC using the second right data. Hence, the viewable content changes according to the number of times for visiting the store.

Subsequently, a third right data can be acquired when the user visits a chain store B. This is because both the stores A and B adopt the same system, and the server device reads out right data recorded one of a portable reproduction device or a right verification device and determines which number in the sequence the nth right data is, and then provides right data of the nth +1. Hence, operations described in the above are able to perform without connecting the server devices of each store through a LAN.

## Claims

1. A contents providing system having a right verification device and a reproduction device, wherein:
the right verification device comprising:
access means for accessing a right recording part recording right data; and
a near-distance communication part communicating with the reproduction device by the near-distance communication method;
the reproduction device comprising:
access means for accessing a content recording part recording contents for the reproduction device;
a near-distance communication part communicating with the right verification device by the near-distance communication method; and reproduction means for reproducing the contents for the reproduction device verified the existence of the right data corresponding to the contents by the right verification means;
the right verification device or the reproduction device further comprising:
the right verification means for verifying by communication between the right verification device and the reproduction device using each said near-distance communication part whether the right data is stored in the right recording part connected to the right verification device or not, the right data corresponding to the contents for the reproduction device to be reproduced.

2. A right verification device comprising of a contents providing system with a reproduction device, the right verification device comprising:
a near-distance communication part communicating with the reproduction device by the near-distance communication method;
access means for accessing a right recording part which records right data; and
right verification means for verifying by communication with the reproduction device using the near-distance communication part whether the right data is recorded in the right recording part connected to the right verification device or not, the right data corresponding to the contents for the reproduction device to be reproduced.

3. A right verification program for performing a right verification device comprising of contents providing system with a reproduction device by computer, the right verification device comprising:
access means for accessing a right recording part recording the right data;
right verification means for verifying by communication with the reproduction device using a near-distance communication part whether the right data is recorded in the right recording part connected to the right verification device or not, the right data corresponding to the contents for the reproduction device to be reproduced.

4. A reproduction device comprising:
a near-distance communication part communicating with the right verification device by the near-distance communication method;
access means for accessing a content recording part recording contents for the reproduction device; and
reproduction means for reproducing the contents for the reproduction device verified existence of right data corresponding to the contents by the right verification means;
right verification means for verifying by communication with the right verification device using each said near-distance communication part whether the right data is stored in the right recording part connected to the right verification device or not, the right data corresponding to the contents for the reproduction device to be reproduced.

5. A reproduction program for performing a reproduction device comprising of contents providing system with a right verification device by computer, the reproduction device comprising:
access means for accessing a content recording part recording contents for the reproduction device;
reproduction means for reproducing the contents for the reproduction device verified existence of right data corresponding to the contents by the right verification means; and
right verification means for verifying by communication with the right verification device using the near-distance communication part whether the right data is stored in the right recording part connected to the right verification device or not, the right data corresponding to the contents for the reproduction device to be reproduced.

6. The device according to claim 4 or the program according to claim 5, wherein:
the right verification device further comprising:
right state transmission means for transmitting data of showing a right state to the reproduction device by the near-distance communication part; right verification means for verifying whether the right data is recorded in the right recording part connected to the right verification device or not by the data of showing the right state received from the right verification device.

7. The system, the device, or the program according to any one of claims 1 to 6, wherein:
the right recording part is portable recording medium connected to the right verification device.

8. The system, the device, or the program according to claim 7, wherein:
the portable recording medium records the right data containing a code identifying the contents for the reproduction device and a code identifying the right verification device or a user using the right verification device.

9. The system, the device, or the program according to claim 7, wherein:
the portable recording medium records the right data containing a code identifying the contents for the reproduction device and a code identifying the right verification device or a user using the right verification device.

10. The system, the device, or the program according to claim 9, wherein:
the right verification means receives the code identifying the right verification device establishing the communication with the reproduction device or the user using the right verification device, decrypts the right data read from the portable recording medium in accordance with the code, and verifies whether the right data is decrypted accurately or not, the right data corresponding to the contents for the reproduction device to be reproduced.

11. The system, the device, or the program according to any one of claims 1 to 6, wherein:
the right verification device comprises the right recording part.

12. The system, the device, or the program according to any one of claims 1 to 11, wherein:
the right recording part is a portable recording medium connectable to the reproduction device.

13. The system, the device, or the program according to any one of claims 1 to 11, wherein:
the reproduction device comprises the content recording part.

14. The system, the device, or the program according to any one of claims 1 to 13, wherein:
the contents for the reproduction device is transmitted from a sever device capable of communication with the reproduction device or a device communicated with the reproduction device by extensive communication method.

15. The system, the device, or the program according to any one of claims 1 to 14,
the right verification device further comprising:
a reproduction instruction means for transmitting a content reproduction instruction to the reproduction device by the near-distance communication part;
the reproduction device further comprising:
a reproduction instruction acquisition means for receiving the content reproduction instruction from the right verification device by the near-distance communication part;
the right verification means for verifying whether the right verification device has the right of the contents for the reproduction device, the contents instructed to reproduce from the right verification device.

16. The system, the device, or the program according to any one of claims 6 to 15,
the right verification device comprising:
a communication process startup means for starting processes for communication with the reproduction device using the near-distance communication part;
a right state transmission means for transmitting data of showing a right state at starting the communication by the near-distance communication part;
the reproduction device comprising:
a memory control means for receiving the data of showing a right state by the near-distance communication part, memorizing the data to a temporary memory part, and deleting the data caused by closing the communication with the right verification
device.

17. The system, the device, or the program according to any one of claims 6 to 16, wherein:
the right state transmission means transmits the data of showing a right state of the right data corresponded to the request from the reproduction device.

18. The system, the device, or the program according to any one of claims 1 to 17,
the right verification device further comprising:
a communication part communicating with a right issuing device by extensive-distance communication method or near-distance communication method;
request means for transmitting a request for acquiring a right to the right issuing device by the communication part;
receiving means for receiving the right data from the right issuing device by the communication part.

19. The system, the device, or the program according to any one of claims 1 to 17, wherein:
the right verification device is a portable reproduction device;
the portable reproduction device comprising:
an extensive-distance communication part communicating with a server device by the extensive-distance communication method;
request means for transmitting the request for receiving the right to the server device by the extensive-distance communication part;
acquisition means for receiving the right data and the contents for a portable device from the server device by the extensive-distance communication method;
a content recording part recording the contents for a portable device received by the acquisition means;
reproduction means for reproducing the contents for a portable device recorded at the content recording part;
reproduction instruction means for transmitting an instruction for reproducing the contents to the reproduction device by the near-distance communication part.

20. The system, the device, or the program according to claim 19, wherein:
the right verification means transmit to the portable reproduction device the fact that the right verification device does not have the right by the near-distance communication part, when determining the right verification device dose not have the right data corresponding to the contents for the reproduction device instructed to reproduce;
the portable reproduction device further comprising: acquiring process start means for starting a process for proposing to acquire the right when receiving the fact that the right verification device does not have the right by the near-distance communication part.

21. The system, the device, or the program according to any one of claims 1 to 20, wherein:
the right verification device permits or rejects the reproduction by the following process A) or B):
A) permitting the reproduction by transmitting a signal for permitting the reproduction to the reproduction means when determining the reproduction device has the right data corresponding to the contents for a reproduction device instructed to reproduce, and, rejecting the reproduction by transmitting a signal for rejecting the reproduction or not transmitting the signal for permitting the reproduction when determining the reproduction device dose not have said right data,
B) permitting the reproduction by transmitting the signal for permitting the reproduction to the reproduction means or not transmitting the signal for rejecting the reproduction when determining the reproduction device has the right data corresponding to the contents for a reproduction device instructed to reproduce, and, rejecting the reproduction by transmitting the signal for rejecting the reproduction when determining the reproduction device dose not have said right data.

22. The system, the device, or the program according to any one of claims 1 to 21, wherein:
right data is a key to decrypt the encrypted contents for the reproduction device;
right verification means permits the reproduction of the decrypted contents for the reproduction device by giving to the reproduction means the key for the contents for the reproduction device instructed to reproduce when determining the reproduction device has the key, and, rejecting the reproduction of the decrypted contents by not giving the key to the reproduction device when determining the reproduction device dose not have the key.

23. The system, the device, or the program according to any one of claims 1 to 22, wherein:
a right verification device is any one of a noncontact type IC card, a mobile phone, and a personal digital assistance.

24. The system, the device, or the program according to any one of claims 1 to 23, wherein:
a reproduction device is any one of a video reproduction device, a hard disk recorder, a DVD reproduction device, television sets, a stereo device, a portable music reproduction device, a personal computer, a car navigation device, and a game console.

25. The system, the device, or the program according to any one of claims 1 to 24, wherein:
the reproduction device comprising a main unit and a near-distance communication unit;
the main unit comprising:
access means for accessing a content recording part recording for recording the contents for the reproduction device;
reproduction means for reproducing the contents verified the existence of the right data by the right verification device;
the near-distance communication device comprising:
a near-distance communication part communicating with the right verification device by the near-distance communication method.

26. The system, the device, or the program according to claim 25, wherein:
a main unit communicating with the right verification device, and receiving the contents for the reproduction device through the right verification device capable of communicating by the extensive-distance communication method.

27. The system, the device, or the program according to any one of claims 1 to 26, wherein:
the reproduction device comprising a near-distance communication device and reproduction devices;
each said reproduction device connected to the near-distance communication to communicate;
the near-distance communication device comprising the near-distance communication part and the right verification method.

28. The system, the device, or the program according to any one of claims 1 to 27, wherein:
the near-distance communication parts of the right verification device and the reproduction device communicate by wired or wireless.

29. The system, the device, or the program according to any one of claims 1 to 28, wherein:
the reproduction device comprising:
transmission means for transmitting a suspended position of the contents for the reproduction device when receiving a signal for suspending the reproduction of the contents;
the right verification device comprising:
record means for recording the suspended position acquired to a recording part;
the right verification device transmitting the suspended position recorded with corresponding to the contents for the reproduction device with transmitting a command for reproducing the contents for the reproduction device to the reproduction device;
the reproduction device comprising:
reproduction restarting means for restarting the reproduction of the contents for the reproduction device from the suspended position transmitted with the command.
